# EUROPÄISCHE PATENTSCHRIFT

(11) **EP 0 559 024 B1**
(45) Veröffentlichungstag und Bekanntmachung des Hinweises auf die Patenterteilung: **02.01.1997**
(21) Anmeldenummer: 93102650.4
(22) Anmeldetag: 19.02.1993
(51) Int. Cl.: A01D 78/10, A01B 69/00

(54) **Heuwerbungsmaschine**
Hay making machine
Machine de fenaison

(30) Priorität: 02.03.1992 DE 4206504; 13.06.1992 DE 4219488
(43) Veröffentlichungstag der Anmeldung: 08.09.1993
(73) Patentinhaber: Maschinenfabriken Bernard Krone GmbH, D-48480 Spelle (DE)
(72) Erfinder: Krone, Bernard, W-4441 Spelle (DE); Kreienbaum, Hubert, W-4424 Stadtlohn (DE); Horstmann, Josef, Dipl.-Ing., W-4530 Ibbenbüren (DE)

(56) Entgegenhaltungen:
- EP-A- 0 073 900
- DE-A- 4 021 812
- DE-U- 8 807 385
- DE-U- 9 103 150
- DE-U- 9 114 315
- FR-A- 1 592 550
- FR-A- 2 260 278
- FR-A- 2 438 414
- GB-A- 2 092 421
- US-A- 4 723 401
- US-A- 4 821 499

## Beschreibung

Die Erfindung betrifft eine Heuwerbungsmaschine, insbesondere eine Schwadmaschine, gemäß dem Oberbegriff des Anspruchs 1.

Es sind Heuwerbungsmaschinen mit mindestens einem, vorzugsweise zwei Kreiselrechen bekannt, die zum Zusammenführen von auf der Feld- bzw. Wiesenfläche breitverteiltem Halm- und Blattgut zu Schwaden Verwendung finden. Solche Maschinen sind beispielsweise in der DE 91 03 150 U1 oder der EP 03 16 896 A1 beschrieben. In beiden Schriften werden Heuwerbungsmaschinen beschrieben, deren Kreiselrechen an Seitenträgern eines Fahrgestellrahmens gelagert sind. Diese haben in Arbeitsposition eine etwa horizontale Ausrichtung und sind für den Transport nach oben verschwenkbar bis in eine annähernd vertikale Lage. Die Seitenträger sind Teil eines Mittelteils der Maschinen. Dieser wird über eine Zugdeichsel an einem landwirtschaftlichen Zugfahrzeug angehängt und stützt sich heckseitig über Laufräder zum Erdboden hin ab. Diese Laufräder sind nach der DE 91 03 150 U1 an einem Querbalken, der als Fahrgestell ausgelegt und um eine etwa vertikale Achse verschwenkbar ist, gehaltert. Schwenkbewegungen des Querbalkens mit den Laufrädern erfolgen dadurch, daß der Querbalken über Steuerstangen mit dem Anbaubock am Zugfahrzeug verbunden ist. Eine derartige Heuwerbungsmaschine ist nur zur Formung eines Mittelschwades geeignet, indem die Kreiselrechen bei entgegengesetztem Drehsinn nach innen und hinten umlaufen. Querkräfte heben sich durch den entgegengesetzten Drehsinn der Kreiselrechen gegenseitig auf. Bei einer Geradeausfahrt des Zugfahrzeuges läuft die Heuwerbungsmaschine in Längsrichtung ausgerichtet hinter dem Zugfahrzeug her und Winkelstellungen ihres Maschinenrahmens und ihrer Zugdeichsel zur vertikalen Fahrtrichtungsmittelebene verändern sich nur bei Kurvenfahrten des Zugfahrzeuges.

Gemäß der EP 03 16 896 A1 sind Laufräder einzeln um etwa vertikale Achsen verschwenkbar an einem Querbalken gelagert und über eine Spurstange miteinander verbunden. Auch hier wird die Heuwerbungsmaschine lenkbar und dadurch manövrierfähig, indem der Anbaubock am Zugfahrzeug über Steuerstangen mit der Spurstange verbunden ist. Diese Heuwerbungsmaschine wird auch hinter dem Zugfahrzeug gezogen und die jeweils zwei Kreiselrechen arbeiten nebeneinander.
Zwei nebeneinander arbeitende, entgegengesetzt umlaufende Kreiselrechen weist auch eine Heuwerbungsmaschine auf, die in der DE 35 29 771 C2 beschrieben ist. Hier handelt es sich um eine Anbaumaschine, die keinen Fahrgestellrahmen hat. Die Drehrichtung der Kreiselrechen ist aber umkehrbar, so daß wahlweise zur Maschinenmitte oder nach außen geschwadet werden kann. Bei Heuwerbungsmaschinen, die nur einen Kreiselrechen aufweisen bzw. bei denen nur die Drehrichtung eines Kreiselrechens verändert werden soll, kann die in der DE 35 29 771 C2 aufgezeigte Lösung nicht zur Anwendung kommen. Ein weiterer Nachteil dieser Lösung besteht in der radialen Ausrichtung der Zinkenspitzen zum Kreiselrad des Kreiselrechens, wodurch insbesondere bei hohen Fahrgeschwindigkeiten nur ein Teil der erreichbaren Fläche auf dem Erdboden von den Zinken überstrichen wird.

Letztere Nachteile werden durch eine tangentiale Anordnung von Zinkenarmen an einem Kreiselrad einer Heuwerbungsmaschine, wie sie beispielsweise in der GB 2 092 421 A beschrieben ist, beseitigt. Derartige Heuwerbungsmaschinen sind als Universalmaschinen zum Schwaden und zum Zetten ausgebildet. Zinkentragarme können hierbei aus einer ungesteuerten, radialen Neutrallage in eine gesteuerte, tangentiale Rechts- oder Linkslage um etwa 180 Grad seitwärts verschwenkt werden. Die Verstellfunktion bedingt zwei gleichwirkende Steuerrollen an jedem Steuerarm und einen Verschwenk- und Verriegelungsmechanismus, der es erlaubt, daß eine jeweils in einer Steuerkurve befindliche erste Steuerrolle aus der Steuerkurve über den Zinkenarm herausgeschwenkt werden kann, so daß anschließend nach einem Verschwenkvorgang des Steuerarmes in horizontaler Ebene eine zweite Steuerrolle wieder in die Kurvenbahn einschwenk- bzw. einführbar ist. Ein derartiger Verschwenk- und Verriegelungsmechanismus benötigt mehrere Schwenkachsen und eine Rasteinrichtung, die auf Grund von Toleranzen die Laufrollenführung und damit ihre Laufruhe beeinträchtigt. Ferner muß der Verschwenk- und Verriegelungsmechanismus konstruktiv sehr stabil ausgeführt sein, da die gesamte Antriebskraft für einen Zinkenarm über diesen übertragen wird. Letzteres erhöht wiederum die Herstellungskosten. Ein weiterer wesentlicher Nachteil besteht bei derartigen Heuwerbungsmaschinen darin, daß die Zinken nicht mit kostengünstigen aufgerollten und nur in Rollrichtung ihrer Windungen belastbaren Federspeichern ausgebildet sein können. Solche Zinken würden bei einem Drehrichtungswechsel eines Kreiselrades im Rücken, d.h. entgegen ihrer Rollrichtung belastet und dadurch aufgebogen, was zur Funktionsunfähigkeit bis hin zu ihrer Zerstörung führen würde. Elastisch in einem Befestigungs- und Federungskörper aus Gummi eingebettete Zinken haben sich in der Praxis nicht bewährt und sind auch sehr teuer. Bei der Arbeit werden derartige Heuwerbungsmaschinen von einem Zugfahrzeug gezogen und angetrieben und laufen diesem in Fahrtrichtung hinterher. Ihre Abstützung zum Erdboden erfolgt über Stützräder unter jedem Kreiselrad. Bei der Ablage von einem Seitenschwad treten hier erhebliche Querkräfte auf, wie sie nachfolgend noch beschrieben werden.

Es sind weitere Heuwerbungsmaschinen bekannt, bei denen mehrere Kreiselrechen mit gleicher Drehrichtung entweder nebeneinander oder in Fahrtrichtung versetzt zueinander arbeiten. Bei gleichem Drehsinn beider Kreiselrechen werden je nach der Wahl dieser Anordnung entweder zwei Einzelschwade geformt oder ein Kreiselrechen übergibt Halmgut an den zweiten, nachgeordneten Kreiselrechen und durch diesen wird ein Schwad abgelegt. Ein gemeinsamer Mittelschwad beider Kreiselrechen ist durch diese Heuwerbungsmaschinen nicht formbar. Dies ist nur möglich bei Schwadern, deren Kreiselrechen in entgegengesetztem Drehsinn rotieren.

Um die Zuordnung von Kreiselrechen mit gleichem Drehsinn zueinander zu verändern, wird zumindest ein Kreiselrechen an einem um eine etwa vertikale Schwenkachse verschwenkbaren Ausleger oder Tragholm gelagert. Dadurch ist die Position dieses Kreiselrechens relativ zu dem zweiten Kreiselrechen in und quer zur Fahrtrichtung veränderbar, was die Bildung der beiden verschiedenen obengenannten Schwadbilder zur Folge hat.

Ein solcher Schwader ist beispielsweise in der DE 40 21 812 A1 beschrieben, wobei hier ein Kreiselrechen an einem Zugdeichselausleger angeordnet ist und ein zweiter Kreiselrechen an einem Ausleger gelagert ist, welcher gelenkig mit dem Zugdeichselausleger verbunden ist. Durch Verschwenken des Auslegers mit dem zweiten Kreiselrechen kann erreicht werden, daß der zweite Kreiselrechen entweder schräg hinter dem ersten Kreiselrechen arbeitet oder genau hinter dem ersten Kreiselrechen transportiert wird. Auch hier ist der Nachteil vorhanden, daß kein gemeinsamer Mittelschwad beider Kreiselrechen formbar ist. Ferner treten bei der Ablage von einem Seitenschwad erhebliche Querkräfte auf. Diese Querkräfte bilden sich aus einer Addition von Reaktionskräften gegenüber den Rechzinken beim Transport von Erntegut und aus Reaktionskräften aus einer Zugkraft auf die Stützräder des hinteren Rechkreisels gegenüber dem Erdboden. Derartige Heuwerbungsmaschinen eignen sich nur bedingt zur Arbeit am Hang.

Bei einem weiterhin bekannten Schwader nach der DE 88 07 385 U1 werden zwei Kreiselrechen über Zugdeichselausleger an einem Tragbalken gehaltert, der im wesentlichen quer zur Fahrtrichtung ausgerichtet ist, dessen Winkelstellung zur Fahrtrichtung aber in vorwählbaren Positionen festlegbar ist. Dadurch kann wahlweise einer der Kreiselrechen dem anderen vorgeordnet sein und die Überlappung der Arbeitsflächen ist einstellbar. Hier sind ebenfalls die beiden beschriebenen Schwadbilder erreichbar. Dieser Schwader zeichnet sich durch eine geringere Baulänge als der nach der DE 40 21 812 A1 aus, besitzt aber Nachteile in bezug auf die Transportfähigkeit. Die mögliche Arbeitsbreite ist stark begrenzt, da bei großen Kreiselrechen ein gefahrloser Straßentransport nicht mehr möglich ist. Bei der Schwadablage treten hier ebenfalls Querkräfte auf, die über die Rechzinken hervorgerufen werden.

Eine durch die DE 42 01 881 A1 bekannte Heuwerbungsmaschine hat (neben den Merkmalen nach der DE 91 03 150 U1) Seitenträger, die Teile eines Tragbalkens sind, welcher um eine etwa vertikale Achse relativ zur Fahrtrichtung verschwenkbar ist. Dadurch kann die Zuordnung der beiden vorhandenen Kreiselrechen verändert werden. Hier sind bereits in vorteilhafter Weise drei verschiedene Schwadbilder zu erzeugen, indem durch einen Kreiselrechen Halmgut wahlweise nach rechts oder links abgelegt wird, wobei aber möglicherweise Unterschiede in der Arbeitsqualität auftreten.

Bei im gleichen Drehsinn rotierenden Kreiselrechen und Ablage eines Seitenschwades oder zweier Einzelschwade treten ausgehend von den Kreiselrechen relativ große Querkräfte auf, die die Spurtreue der Heuwerbungsmaschine negativ beeinflussen. Dies ist ein Nachteil aller Heuwerbungsmaschinen mit nur einem oder gleichsinnig umlaufenden Kreiselrechen.

Aus der EP 0 130 617 A1 ist nun eine Heuwerbungsmaschine,insbesondere eine Schwadmaschine, bekannt, die mindestens einen Kreiselrechen besitzt, an dessen Kreiselrad mehrere speichenartig abstehende und tangential zum Kreiselrad ausgerichtete Zinkenarme in Traglagern befestigt sind. Derartige Kreiselrechen für Heuwerbungsmaschinen sind konstruktiv so ausgeführt, daß sie bei der Fabrikation im Werk materialsparend und montagefreundlich aufgebaut sind. Zu diesem Zweck sind die einzelnen Traglager besonders geformt und jedes mit Befestigungsösen ausgebildete Traglager bildet zusammen mit einem Zinkenarm, einem Steuerhebel, einer Steuerrolle und Lagerteilen eine kompakte feste Baueinheit, die je nach Bedarf bei der Montage im Werk auf Grund ihrer Wendbarkeit in links- oder rechtsdrehenden Kreiselrechen montiert und entsprechend mit dem Kreiselrad über Befestigungselemente wie Schrauben oder Bolzen mit Gewindeenden befestigt werden können. Es liegt hier zwar eine lösbare Verbindung zwischen den vorstehenden Baueinheiten untereinander und zwischen diesen und Teilen eines Kreiselrades vor, die, wie bei allen herkömmlichen Baueinheiten, zu Montagezwecken beispielsweise zur Serienfertigung oder bei der Bandmontage immer vorhanden ist. Ferner müssen bei der Montage der Baueinheiten an links- oder rechtsdrehenden Kreiselrechen die Zinkenarme mit entweder beidseitig belastbaren, geraden Zinken oder jeweils mit Zinken in einer Ausführungsform für links- oder rechtsdrehende Kreiselrechen ausgebildet sein. Zinkenarme lassen sich aus den Traglagern der Baueinheit mit einfachen Hilfsmitteln nicht entfernen, so daß im praktischen Einsatz bei der Heuwerbung solche Kreiselrechen nicht für eine Drehrichtungsumkehr geeignet sind.

Eine weitere Heuwerbungsmaschine mit mindestens einem Kreiselrechen zum Schwaden von Erntegut ist aus der DE-AS 17 57 276 bekannt. Der Kreiselrechen dieser Heuwerbungsmaschine ist mit einem um eine aufrechte Achse drehbaren Kreiselrad ausgerüstet, dessen Antrieb über ein Zwischengetriebe, beispielsweise einem Riementrieb, von der Zapfwelle eines Zugfahrzeugs aus erfolgt. Im Betrieb stützt sich das Kreiselrad über Stützräder zum Erdboden hin ab und mit Federspeichern ausgebildete Zinken sind an etwa horizontal und annähernd tangential zum Kreiselrad ausgerichteten Zinkenarmen gehaltert. Diese werden wiederum in ebenfalls tangential in Längsausrichtung zum Kreiselrad ausgerichteten Traglagern aufgenommen, wobei die Zinkenarme zur Erzeugung von Arbeitsbewegungen um Längsachsen der Traglager an einer begrenzt um die aufrechte Achse verschwenkbaren Kurvenbahn geführt wird. Dieser Kreiselrechen einer Heuwerbungsmaschine läßt sich auf Grund der tangentialen Anordnung seiner Zinkenarme und den an diesen gehalterten mit Federspeichern ausgebildeten Zinkengruppen sowie seiner begrenzt verstellbaren Kurvenbahn rationell bei der Heuwerbung einsetzen. Soll dieser Kreiselrechen jedoch laut der DE-AS 17 57 276 in einer Heuwerbungsmaschine mit einem weiteren Kreiselrechen gegenläufig rotierend angetrieben werden, so muß werksseitig diese Heuwerbungsmaschine mit unterschiedlichen Kreiselrechen für Links- und Rechtslauf bestückt werden. Im praktischen Einsatz kann hier nicht wahlweise die Drehrichtung eines Kreiselrades verändert werden.

Aus der FR 2 260 278 A1 ist noch ein Sternradrechen mit einem als Chassis ausgebildeten Rohrrahmen, der sich über zwei Räder auf dem Erdboden abstützt, bekannt. An dem Rohrrahmen sind mehrere aufrecht stehende, sich überdeckende und um horizontal angeordnete Drehachsen durch Bodenberührung antreibbare Rechscheiben aufgehängt, die an ihrem Umfang mit elastischen Zinken bestückt sind. Die Rechscheiben lassen sich über eine Hubeinrichtung gemeinsam für den Transport parallel zum Erdboden ausheben. Die Räder befinden sich an Enden eines Querträgers und lassen sich an diesem manuell um aufrechte Achsen verschwenken und arretieren. Der Rohrrahmen mit den Rechscheiben stützt sich wiederum im mittleren Bereich des Querträgers auf diesen ab. Etwa an gleicher Stelle befindet sich ein Schwenklager, in dem eine Zugstange befestigt wird, die in Fahrtrichtung des Zugfahrzeuges zeigt und mit letzterem gekoppelt ist. Mittels eines Distanzstückes lassen sich verschiedene Winkelpositionen der Zugstange in bezug auf den Querträger einstellen, indem unterschiedliche Bohrungen in Flanschplatten am Querträger und an der Zugstange benutzt werden. Die Verstellbarkeit der Zugstange und der Räder um ihre aufrechten Achsen sind erforderlich, um verschiedene Arbeitsbreiten des Sternradrechens zu erreichen und ferner um eine derart breite Rahmenkonstruktion in eine Transportstellung bringen zu können. Bei der Arbeit auf dem Felde oder der Wiese und bei Geradeausfahrt sind die Räder in jeder Arbeitsstellung immer manuell so einzustellen, daß sie parallel zur Zugstange und damit parallel zur Fahrtrichtung ausgerichtet sind. Sämtliche Reaktionskräfte, die auf die Rechscheiben und damit auf das Chassis übertragen werden, ergeben eine als Querkraft wirkende Komponente, die weg von der Schwadablagestelle gerichtet ist. Diese muß über die Räder kompensiert werden. Würde man die Zugstange weiter in Richtung Transportstellung einstellen, so ergäbe sich eine zusätzliche Querkraft aus der Zugkraft, die ebenfalls von der Schwadablagestelle weg gerichtet ist und ein negatives Fahrverhalten des Sternradrechens ergeben würde.

Es ist Aufgabe der Erfindung, die gattungsgemäße Schwadmaschine so weiterzubilden, daß bei unterschiedlichen Schwadformen ein stabiles Fahrverhalten insbesondere beim Arbeiten am Hang gewährleistet und ein Abdriften weitgehend verhindert wird.

Zur Lösung dieser Aufgabe zeichnet sich die Heuwerbungsmaschine der obengenannten Art durch die im kennzeichnenden Teil des Anspruchs 1 angegebenen Merkmale aus.

Hinsichtlich weiterer Ausgestaltungen der Erfindung wird auf die Ansprüche 2 bis 22 verwiesen.

Die Heuwerbungsmaschine ist mit zwei nebeneinander an Seitenträgern gelagerten Kreiselrechen ausgerüstet, wobei eine Antriebsverbindung zwischen einem Zugfahrzeug und den Kreiselrechen besteht. In der Antriebsverbindung zu einem der Kreiselrechen ist ein Zwischengetriebe angeordnet, über welches die Drehrichtung dieses Kreiselrechens umkehrbar ist, so daß entweder beide Kreiselrechen gleichsinnig oder gegensinnig umlaufen. Die Seitenträger bilden gemeinsam mit einem Mittelteil einen Maschinenquerträger, der auch so ausgelegt sein kann, daß ein Versatz der Kreiselrechen in Fahrtrichtung vorhanden ist. Ein Rahmen der Heuwerbungsmaschine, mit dem das Mittelteil des Maschinenquerträgers verbunden ist, ist nach vorne als Zugdeichsel ausgelegt und durch einen Rahmenausleger nach hinten verlängert. Am hinteren Ende dieses Rahmenauslegers ist ein weiterer Querträger vorgesehen, welcher als Fahrgestell ausgelegt ist. An ihm sind Laufräder gelagert, die die Heuwerbungsmaschine zum Erdboden hin abstützen. In einer Arbeitslage sind die Seitenträger etwa horizontal ausgerichtet und Achsen, um die die Kreiselrechen rotieren, stehen annähernd senkrecht. Die Kreiselrechen stützen sich jeweils auf Stützrädern zum Erdboden ab, die sich selbsttätig der Fahrtrichtung anpassen. Zur Erreichung einer Transportlage sind die Seitentärger mit den Kreiselrechen relativ zum Mittelteil nach oben verschwenkbar.
In einer Grundstellung der Heuwerbungsmaschine wird bei gegensinnig umlaufenden Kreiselrechen ein Mittelschwad geformt. Rotieren die Kreiselrechen gleichsinnig, werden zwei Einzelschwade abgelegt.
Um auch einen gemeinsam durch beide Kreiselrechen zu formenden Seitenschwad ablegen zu können, wird erfindungsgemäß die gesamte Heuwerbungsmaschine aus der Grundstellung relativ zur Fahrtrichtung um eine etwa vertikale Achse verschwenkt, die durch einen Zugpunkt zwischen dem Zugfahrzeug und der Zugdeichsel verläuft. Somit wird dann die Heuwerbungsmaschine versetzt zum Zugfahrzeug gezogen. Vorteilhaft wird die Heuwerbungsmaschine in dem gleichen Drehsinn verschwenkt, in dem die Kreiselrechen rotieren. Durch die dann schräg zur Fahrtrichtung wirkenden Zugkräfte werden die aus der Arbeit der Kreiselrechen resultierenden Querkräfte wieder ausgeglichen, wodurch optimale Fahreigenschaften erreicht werden.
Der Schrägversatz des Maschinenquerträgers und der Zugdeichsel wird erreicht, indem die Stellung der Laufräder des Fahrgestells, speziell die Ausrichtung ihrer Laufrichtung zum Maschinenquerträger veränderbar und in verschiedener Weise festlegbar ist. Dies kann entweder durch Verschwenken des gesamten, als Fahrgestell ausgelegten Querträgers relativ zum Maschinenquerträger oder durch paralleles Verschwenken der Laufräder relativ zum Fahrgestell um jeweils vertikale Achsen erfolgen. Spezielle Möglichkeiten hierfür werden weiter unten in Ausführungsbeispielen beschrieben.
Die Heuwerbungsmaschinen verschiedener Ausführungen können lenkbar sein, indem Schwenkbewegungen des Zugfahrzeugs relativ zu der jeweiligen Heuwerbungsmaschine auch zu Lenkbewegungen der Laufräder führen. Dazu werden diese Schwenkbewegungen über Steuerstangen an die Aufhängung der Laufräder übertragen und die Laufräder werden einzeln oder gemeinsam um etwa vertikale Achsen verschwenkt, wodurch sich ihre Laufrichtung verändert. Wird die Heuwerbungsmaschine direkt hinter dem Zugfahrzeug gezogen, sollen Lenkbewegungen der Laufräder nach links und rechts in etwa gleicher Weise erfolgen, es ist also eine symmetrische Lenkgeometrie erwünscht. Bei veränderter Grundausrichtung der Laufräder, die bewirkt, daß die Heuwerbungsmaschine schräg versetzt hinter dem Zugfahrzeug gezogen wird, ist aber eine unsymmetrische Lenkgeometrie erwünscht. Da die Laufräder in dieser Grundausrichtung schon um etwa 35 Grad zum Maschinenrahmen verschwenkt sind, sollen sie bei Kurvenfahrten nicht oder kaum noch weiter in gleicher Richtung verschwenkt werden, wohl aber Lenkbewegungen in der anderen Schwenkrichtung ausführen. Dies wird erreicht, indem eine Steuerstange, über die Lenkbewegungen übertragen werden, je nach gewünschter Grundstellung der Heuwerbungsmaschine, an einem ortsveränderlichen Anlenkpunkt des Anbaubocks gelagert wird. Der mit dem Zugfahrzeug verbundene Anbaubock bewegt sich bei Lenkbewegungen des Zugfahrzeugs gemeinsam mit diesem relativ zur Heuwerbungsmaschine um den Zugpunkt zwischen dem Zugfahrzeug und der Heuwerbungsmaschine. Dabei ist eine Bewegungskomponente des Anlenkpunktes der Steuerstange in Fahrtrichtung gerichtet, wobei diese Bedeutung für die Erzeugung von Lenkbewegungen der Laufräder hat. Je nach Lage des Anlenkpunktes relativ zum Zugpunkt ist die in Fahrtrichtung gerichtete Bewegungskomponente des Anlenkpunktes verschieden groß. Liegt der Anlenkpunkt der Steuerstange etwa in Fahrtrichtung vor oder hinter dem Zugpunkt, haben Lenkbewegungen des Zugfahrzeugs kaum Änderungen der Laufrichtung der Laufräder zur Folge. Liegt der Anlenkpunkt etwa quer zur Fahrtrichtung neben dem Zugpunkt, wird er bei Lenkbewegungen deutlich in oder entgegen Fahrtrichtung bewegt, wodurch deutliche Lenkbewegungen der Laufräder hervorgerufen werden. Somit ist durch Verlagerung des Anlenkpunktes der Steuerstange am Anbaubock die Lenkgeometrie der Heuwerbungsmaschine in der gewünschten Weise zu beeinflussen.
Der in seiner Drehrichtung umkehrbare Kreiselrechen weist ebenfalls vorteilhafte Merkmale auf, durch die erreicht wird, daß in absolut gleicher Qualität gearbeitet wird, unabhängig in welchem Drehsinn er rotiert. Dieser Kreiselrechen ist mit tangential an einem Kreiselrad lösbar gehalterten Zinkenarmen ausgerüstet, an denen nachlaufend gezogene Zinken befestigt sind. Das Kreiselrad mit den Zinkenarmen rotiert im Betrieb um eine etwa vertikale Achse, wobei die Zinkenarme mit den Zinken gleichzeitig gesteuerte Bewegungen um Längsachsen der Zinkenarme ausführen. Diese Bewegung wird über eine Kurvenbahn gesteuert, und es wird erreicht, daß sich die Zinken nur innerhalb eines bestimmten Abschnittes ihrer Umdrehung in einer Rechposition befinden. Alle dazu erforderlichen Steuerungsteile sind symmetrisch zu Radialen angeordnet, welche rechtwinklig zu den Längsachsen der Zinkenarme ausgerichtet sind. Dadurch erfolgt in beiden Drehrichtungen eine gleiche Steuerung der Zinkenbewegung. Zur Feineinstellung der Zeit, in der sich die Zinken in ihrer Rechposition befinden, ist die ebenfalls symmetrische Kurvenbahn begrenzt um die Achse verschwenkbar, um die das Kreiselrad rotiert. Erfolgt eine Umkehr der Drehrichtung des Kreiselrechens, werden die Zinkenarme vom Kreiselrad gelöst und spiegelbildlich zu der genannten Radialen wieder montiert. Dazu sind die Zinkenarme beispielsweise zweiteilig ausgelegt. Sie bestehen aus einem Zwischenstück, das am Kreiselrad zu haltern ist, und aus einem Zinkenhalteteil, das lösbar am Zwischenstück so anzustecken ist, daß die Zinken immer der Längsachse des Zinkenarms nachlaufen und ihre Federspeicher nur in der Rollrichtung der Windungen belastet werden. Der Umbauaufwand ist gering, und der Kreiselrechen ist damit vollwertig in beiden Drehrichtungen einsetzbar.

Um eine möglichst große Arbeitsfläche mit den Zinkenspitzen überstreichen zu können, ist deren Lage zur Achse des Kreiselrechens bedeutend. Optimal ist, wenn nicht alle Zinkenspitzen der Zinken eines Zinkenarmes auf einer Radialen liegen sondern eine durch diese Zinkenspitzen gelegte Gerade einen Winkel von 10 Grad bis 30 Grad, vorzugsweise 20 Grad, mit einer Geraden bildet, die durch die Achse des Kreiselrades und die äußerste Zinkenspitze verläuft.
Die weitere Beschreibung der Erfindung erfolgt an Hand von Ausführungsbeispielen. In den dazugehörigen Zeichnungen stellen im einzelnen dar:
- Fig. 1:: Schematische Draufsicht auf eine Heuwerbungsmaschine nach der Erfindung mit verschwenkbarem Fahrgestell in verschiedenen Arbeitspositionen;
- Fig. 2:: schematische Draufsicht auf ein weiteres Ausführungsbeispiel mit längenveränderlichem Rahmenausleger;
- Fig. 3:: schematische Draufsicht auf ein weiteres Ausführungsbeispiel mit längenveränderlicher Steuerstange;
- Fig. 4:: schematische Draufsicht auf ein weiteres Ausführungsbeispiel mit Spurstange und längenveränderlicher Steuerstange;
- Fig. 5:: detailliertere Draufsicht auf die Heuwerbungsmaschine nach Fig. 2;
- Fig. 6:: eine Seitenansicht eines in seiner Drehrichtung umkehrbaren Kreisselrechens nach Fig. 5, teilweise im Schnitt dargestellt;
- Fig. 7:: eine Schnittdarstellung nach Linie VII - VII in Fig. 6;
- Fig. 8:: Einzelheit Z aus Fig. 7 in vergrößertem Maßstab;
- Fig. 9:: Einzelheit W aus Fig. 7 in vergrößertem Maßstab in beiden möglichen Montagevarianten;
- Fig.10:: eine Schnittdarstellung nach Linie X - X in Fig. 9;
- Fig.11:: eine Schnittdarstellung nach Linie XI - XI in Fig. 10;
- Fig.12:: Draufsicht auf eine Heuwerbungsmaschine anderer Ausführung mit einer Anordnung zur Verbesserung der Lenkgeometrie in einer Arbeitsposition direkt hinter einem Zugfahrzeug;
- Fig.13:: Draufsicht auf die Heuwerbungsmaschine nach Fig.12 in einer Arbeitsposition schräg versetzt hinter dem Zugfahrzeug;
- Fig.14:: Einzelheit U aus Fig.13;
- Fig.15:: Einzelheit V aus Fig.13;
- Fig.16:: Diagramm zur Verdeutlichung der Lenkgeometrie der Heuwerbungsmaschine nach den Fig. 12 und 13 in den verschiedenen Arbeitspositionen.

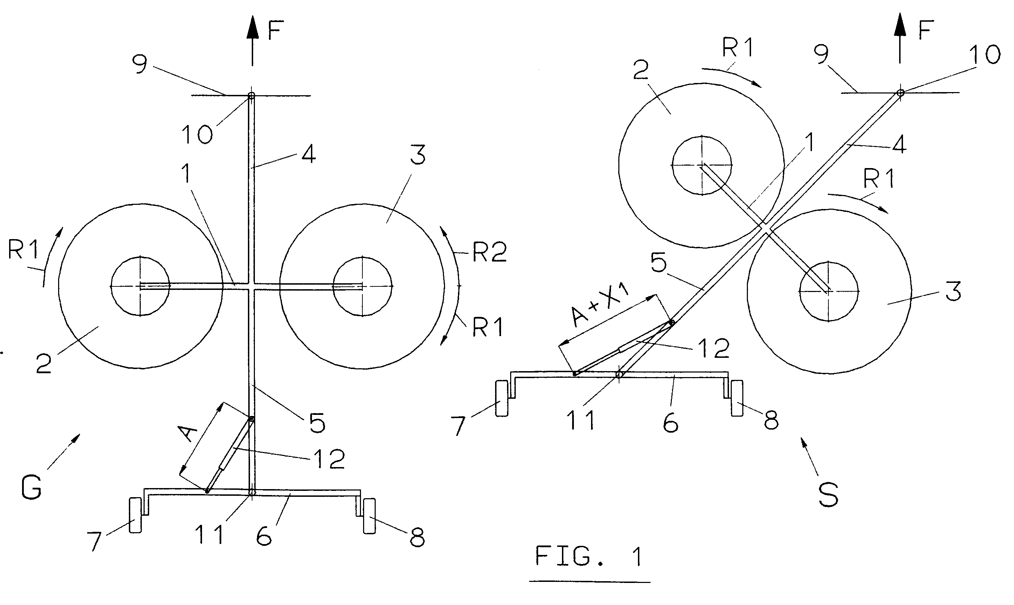

In den Figuren 1 bis 4 sind Ausführungsformen von erfindungsgemäßen Heuwerbungsmaschinen schematisch dargestellt, die wahlweise gerade oder schräg versetzt hinter einem Zugfahrzeug betrieben werden können. Diese Zeichnungen sollen nur das Prinzip verdeutlichen. Sie enthalten keinerlei Details. Alle Ausführungsbeispiele weisen einen Maschinenquerträger 1 auf, an dem Kreiselrechen 2, 3 gelagert sind und der mittig über eine Zugdeichsel 4 von einem Zugfahrzeug gezogen wird. Der Maschinenquerträger 1 ist rechtwinklig zur Zugdeichsel 4 bzw. in einer Grundstellung G auch quer zur Fahrtrichtung F ausgerichtet, kann aber auch, um einen geringen Versatz der Kreiselrechen 2,3 zur Fahrtrichtung F schon in der Grundstellung G zu erreichen, leicht schräg angeordnet sein.

Die Heuwerbungsmaschinen weisen einen nach hinten ragenden mit der Zugdeichsel 4 verbundenen Rahmenausleger 5 auf, der sich endseitig über ein Fahrgestell 6 auf Laufrädern 7, 8 zum Erdboden abstützt. Die Zugverbindung zwischen der Zugdeichsel 4 und dem Anbaubock 9 am Zugfahrzeug sowie eine nicht dargestellte Antriebsverbindung sind gelenkig ausgeführt, so daß die Heuwerbungsmaschinen relativ zum Zugfahrzeug um etwa vertikale Achsen 10 verschwenkbar sind.

In einem in Fig. 1 dargestellten ersten Ausführungsbeispiel ist das Fahrgestell 6 mit den Laufrädern 7, 8 gelenkig um eine etwa vertikale Achse 11 am Rahmenausleger 5 angebracht und durch die Kraft einer Kolben-Zylinderanordnung 12 relativ zu diesem verschwenkbar. Wird die Länge der Kolben-Zylinderanordnung 12 von einem Wert A auf einen Wert A+X1 vergrößert und damit das Fahrgestell 6 verschwenkt, laufen die Laufräder 7, 8 versetzt zum Zugfahrzeug und die Zugdeichsel 4, der Maschinenquerträger 1 und der Rahmenausleger 5 haben eine schräge Ausrichtung. Diese Schrägstellung der Heuwerbungsmaschinen ist in den Figuren mit S gekennzeichnet dargestellt worden.

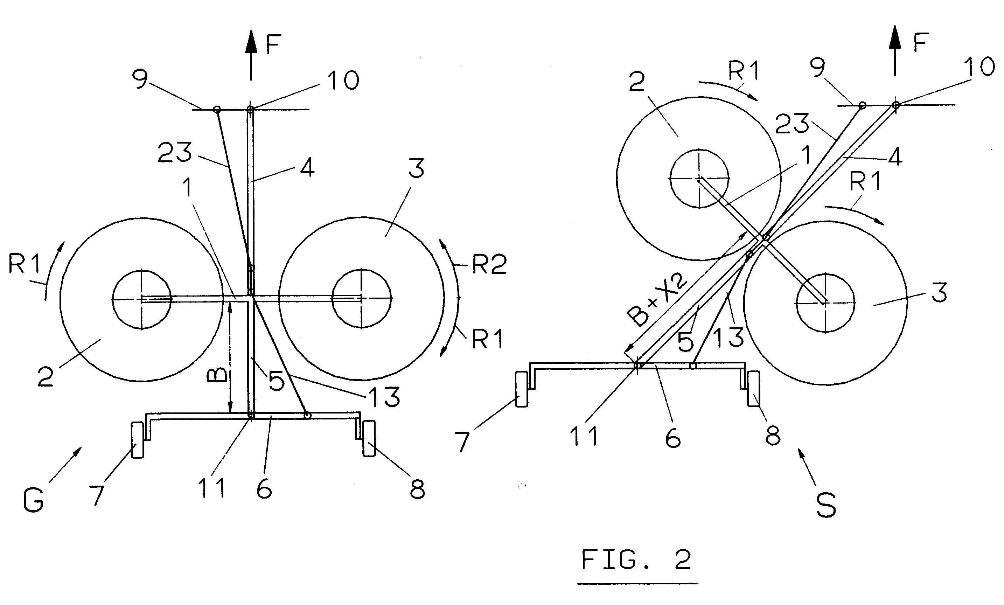

In Fig. 2 ist ein Ausführungsbeispiel einer Heuwerbungsmaschine dargestellt, deren Rahmenausleger 5 nach hinten weist, sich dort ebenfalls am Fahrgestell 6 auf den Laufrädern 7, 8 abstützt, aber längenveränderlich ist. Zusätzlich sind Steuerstangen 13 vorhanden, die den Anbaubock 9 mit dem Fahrgestell 6 verbinden, wodurch die Heuwerbungsmaschine lenkbar ist und nicht nachlaufend wie im ersten Ausführungsbeispiel. Durch Längenänderung des Rahmenauslegers 5 von einem Wert B auf einen Wert B+X2 wird auch hier die Laufrichtung der Laufräder 7, 8 relativ zum Maschinenquerträger 1 und zur Zugdeichsel 4 verändert. Die Lenkbarkeit der Heuwerbungsmaschine ist auch in dieser zum Zugfahrzeug versetzten Stellung gegeben.

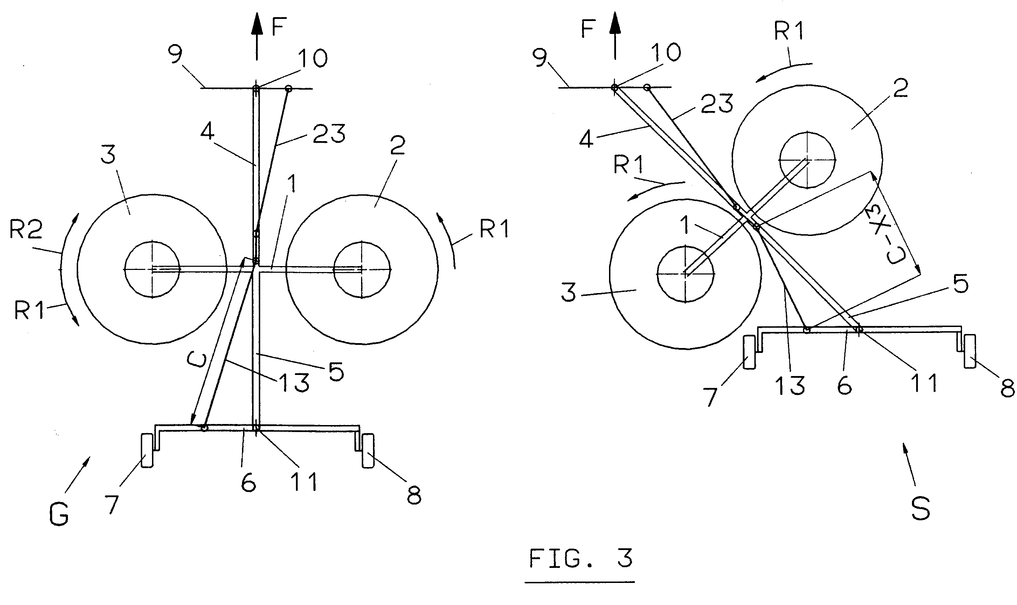

In einem in Fig. 3 dargestellten dritten Ausführungsbeispiel liegt eine mit Fig. 2 vergleichbare Gestaltung vor. Hier ist, anders als bei den ersten Ausführungsbeispielen, die Drehrichtung R1, R2 des linken Kreiselrechens 3 umkehrbar. Desweiteren ist nicht die Länge des Rahmenauslegers 5, sondern die einer Steuerstange 13 von einem Wert C auf einen Wert C-X3 veränderbar. Diese Heuwerbungsmaschine ist in ihrer Grundstellung G länger als die nach Fig. 2, hat sonst aber gleiche Vorteile.

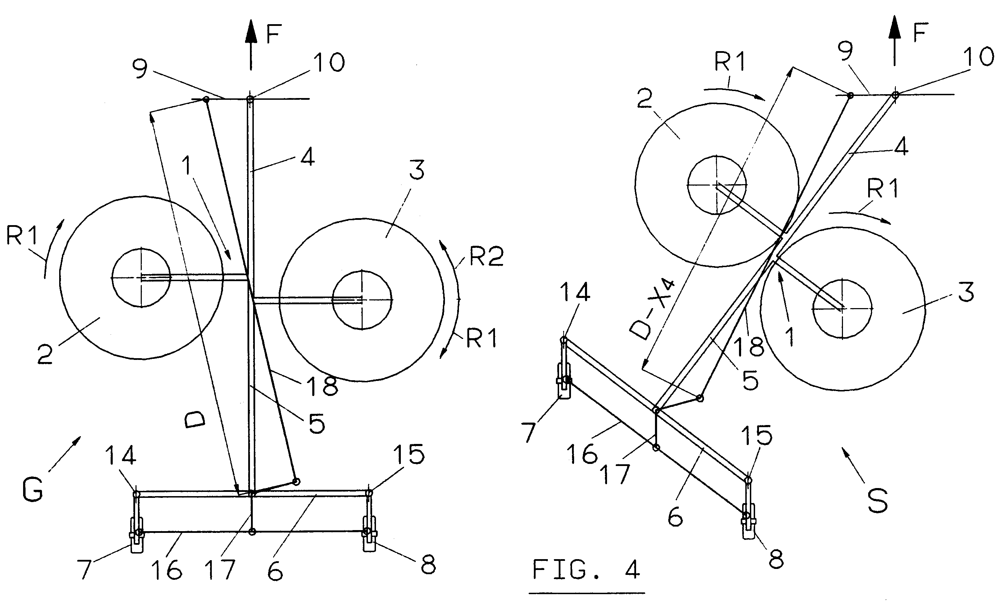

In einem weiteren Ausführungsbeispiel der Erfindung nach Fig. 4 wird nicht das Fahrgestell 6 mit den Laufrädern 7, 8 relativ zum Maschinenquerträger 1 verschwenkt, sondern die Laufräder 7, 8 werden einzeln um etwa vertikale Achsen 14, 15 am Fahrgestell 6 verschwenkt. Dazu werden die Laufräder 7, 8 über eine Spurstange 16 parallel zueinander gehalten. Die Heuwerbungsmaschine ist lenkbar, da die Spurstange 16 über einen Winkelhebel 17 und eine Steuerstange 18 mit dem Anbaubock 9 des Zugfahrzeugs verbunden ist. Die Länge der Steuerstange 18 ist von einem Wert D auf einen Wert D-X4 zu verkürzen, wodurch eine ständige Schrägstellung S der Zugdeichsel 4, des Maschinenquerträgers 1, des Rahmenauslegers 5 und des Fahrgestells 6 zur Fahrtrichtung F erreicht wird. Auch wenn die Heuwerbungsmaschine so versetzt zum Zugfahrzeug gezogen wird, bleibt sie lenkbar und weist eine gute Manövrierfähigkeit auf. Die Kreiselrechen 2,3 dieser Heuwerbungsmaschine sind durch die besondere Gestaltung des Maschinenquerträgers 1 bereits in der Grundstellung G etwas versetzt zueinander. Deswegen ist der Winkel um den die Maschine um die Achse 10 verschwenkt werden muß, um eine Überdeckung der Arbeitsflächen der Kreiselrechen 2,3 zu erreichen geringer als bei den anderen Ausführungsbeispielen. Es muß aber ein größerer Aufwand für den Antrieb der Kreiselrechen 2, 3 betrieben werden.

Um die Längen A, B, C, D der entsprechenden Bauteile zu verändern, können diese beispielsweise teleskopartig ausgebildet und mit Kolben-Zylinderanordnungen versehen sein. So kann vom Zugfahrzeug aus die Schrägstellung S oder Grundstellung G feingradig eingestellt werden. Die in den Fig. 1 bis 4 angegebenen Längendifferenzen X 1 bis X 4 ergeben sich aus konstruktiven Merkmalen der Heuwerbungsmaschinen und sind erforderlich, um eine gewünschte Schrägstellung zu erreichen.

Bei allen Ausführungsbeispielen sind in der Grundstellung G entweder ein Mittelschwad oder zwei Einzelschwade formbar. Vorzugsweise ist auch die Länge des Maschinenquerträgers 1 und damit der Abstand der Kreiselrechen 2, 3 zueinander veränderbar. In der Grundstellung G wird dieser auf ein Maximum eingestellt und in der Schrägstellung S auf ein Minimum. In der Schrägstellung S ist dann bei gleicher Drehrichtung R1 der Kreiselrechen 2, 3 eine Überlappung der Arbeitsflächen dieser Kreiselrechen 2, 3 vorhanden, und es wird ein Seitenschwad gebildet. Von der Arbeit der Kreiselrechen 2, 3 herwirkende Querkräfte werden durch die Winkelstellung zwischen Zugfahrzeug und Heuwerbungsmaschine und die dadurch schräg wirkende Zugkraft ausgeglichen, und es erfolgt kein Abdriften der Heuwerbungsmaschinen bei der Arbeit.

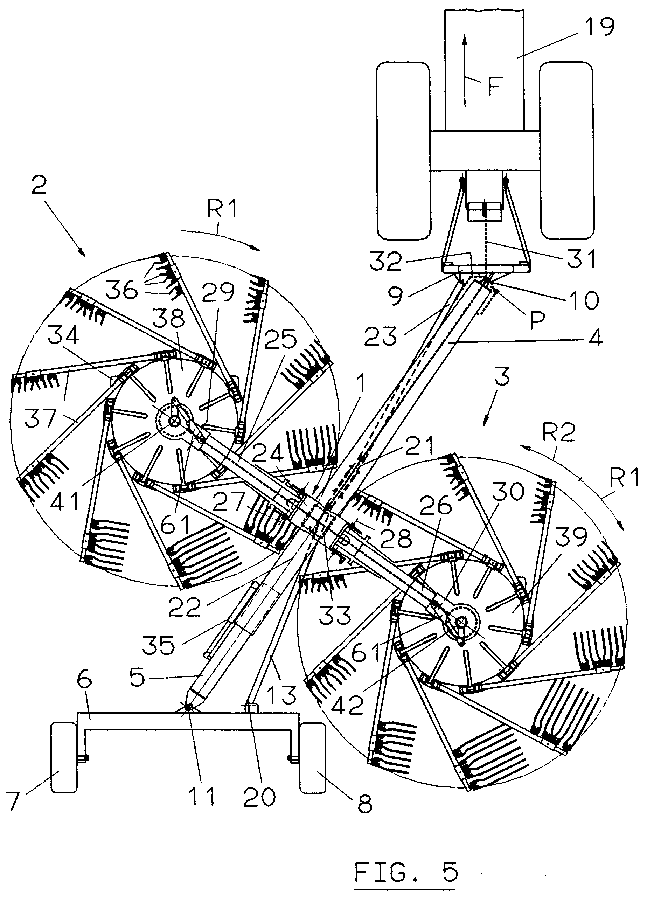

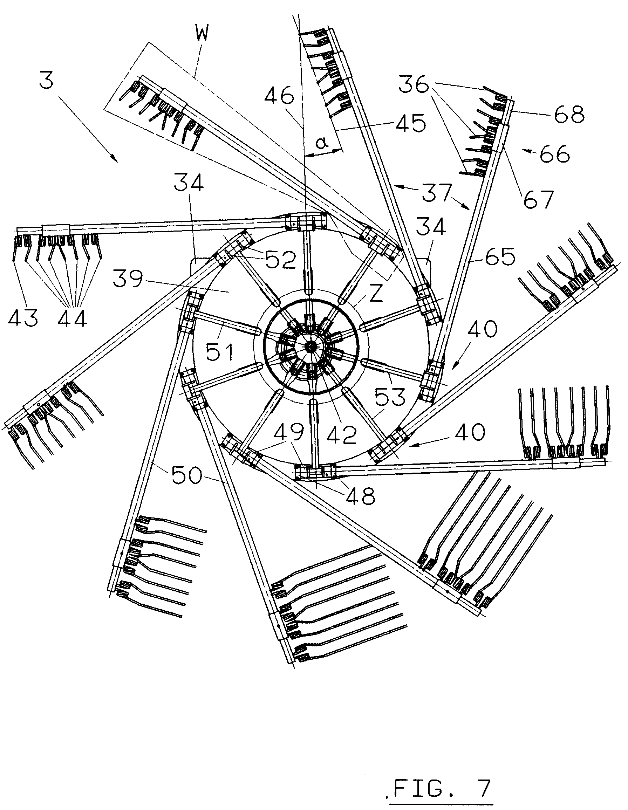

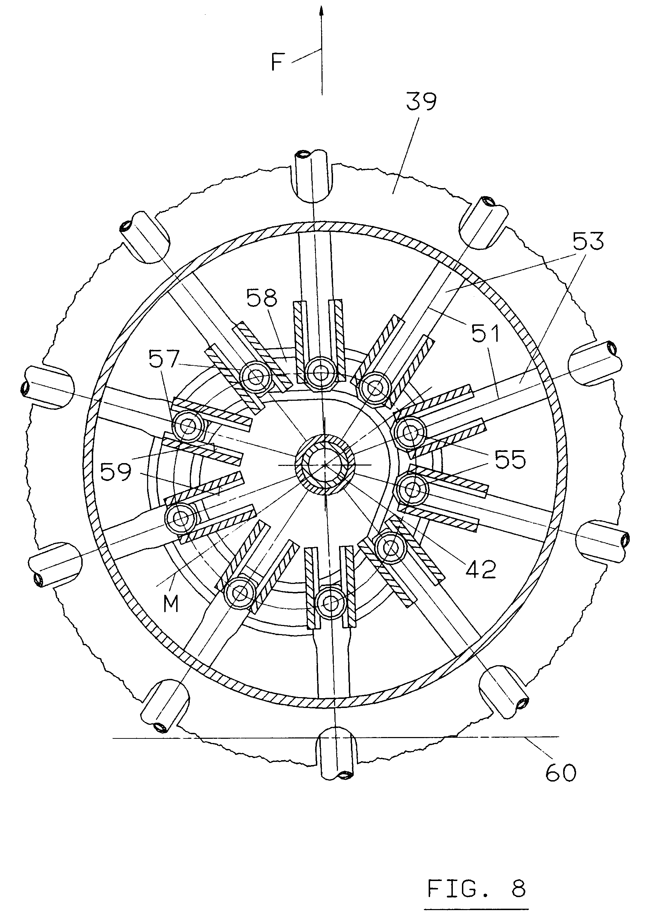

Im weiteren wird die Erfindung an Hand des Ausführungsbeispiels nach Fig. 2, das in den Fig. 5 bis 11 detaillierter dargestellt ist, genauer erläutert.An dem Anbaubock 9, der mit einem Zugfahrzeug 19 verbunden ist, ist die Zugdeichsel 4 um einen Zugpunkt P beweglich angehängt, wobei die Achse 10 durch den Zugpunkt P verläuft. Der Rahmenausleger 5 ist teleskopartig gestaltet, bildet eine Verlängerung der Zugdeichsel 4 und stützt sich endseitig über das Fahrgestell 6 auf den Laufrädern 7, 8 zum Erdboden ab. Die Verbindung zwischen dem Rahmenausleger 5 und dem Fahrgestell 6 ist gelenkig, so daß das Fahrgestell 6 relativ zum Rahmenausleger 5 um die vertikale Achse 11 verschwenkbar ist. Ebenfalls um eine vertikale Schwenkachse 20 ist die Steuerstange 13 beweglich am Fahrgestell 6 gehaltert. Sie ist andererseits gelenkig mit einem Schiebestück 21 verbunden, das parallel zu einer Längsachse 22 der Zugdeichsel 4 verschieblich an der Zugdeichsel 4 gelagert ist. Zwischen dem Schiebestück 21 und dem Anbaubock 9 am Zugfahrzeug 19 besteht eine gelenkige Verbindung in Form einer weiteren Steuerstange 23. Somit ist die Lenkbarkeit der Heuwerbungsmaschine in Abhängigkeit von Kurvenfahrten des Zugfahrzeugs 19 gegeben. Lenkbewegungen des Fahrgestells 6 mit den Laufrädern 7, 8 finden um die Achse 11 statt.
Etwa an der Verbindungsstelle zwischen der Zugdeichsel 4 und dem Rahmenausleger 5 ist der Maschinenquerträger 1 rechtwinklig zu der Längsachse 22 befestigt. Speziell ein Mittelteil 24 des Maschinenquerträgers 1 ist an dem von der Zugdeichsel 4 und dem Rahmenausleger 5 gebildeten Rahmen verschweißt. Am Mittelteil 24 sind Seitenträger 25, 26 gelagert, die begrenzt um Schwenkachsen 27, 28 verschwenkbar sind, wobei die Schwenkachsen 27, 28 etwa parallel zu der Längsachse 22 ausgerichtet sind. Die Seitenträger 25, 26 sind teleskopartig gestaltet und dadurch in ihrer Länge veränderlich. Diese Längenveränderbarkeit wird durch nicht in den Zeichnungen gezeigte Kolben-Zylinderanordnungen erreicht, welche mit der Hydraulikanlage des Zugfahrzeugs 19 verbunden sind.
An den äußeren Enden der Seitenträger 25, 26 ist jeweils ein Kreiselrechen 2, 3 gelagert, wobei diese begrenzt um weitere Achsen 29, 30 beweglich sind, die ebenfalls etwa parallel zu der Längsachse 22 ausgerichtet sind.Der Antrieb der Kreiselrechen 2, 3 erfolgt vom Zugfahrzeug 19 aus über eine Gelenkwelle 31 und ein Schwenkgetriebe 32. Die Leistung wird zum Mittelteil 24 übertragen und dort verzweigt, wobei innerhalb der Antriebsverbindung zum Kreiselrechen 3 ein Zwischengetriebe 33 vorgesehen ist, durch dessen Betätigung die Drehrichtung R1, R2 des Kreiselrechens 3 umkehrbar ist.
Die Kreiselrechen 2, 3 stützen sich auf Stützrädern 34 zum Erdboden ab, wobei sich diese Stützräder 34 selbsttätig der Fahrtrichtung F anpassen.
Durch Längenveränderungen des Rahmenauslegers 5, was durch Betätigung einer Kolben-Zylinderanordnung 35 vom Zugfahrzeug 19 aus vorgenommen wird, ist es möglich, die Winkelstellung des Fahrgestells 6 und damit die Laufrichtung der Laufräder 7, 8 relativ zum Rahmenausleger 5 und somit auch zum Maschinenquerträger 1 und zur Zugdeichsel 4 zu verändern. Die Heuwerbungsmaschine kann, wie in Fig. 5 dargestellt, schräg versetzt hinter dem Zugfahrzeug 19 oder mit parallel zur Fahrtrichtung F ausgerichteter Längsachse 22 direkt hinter dem Zugfahrzeug 19 gezogen werden. Bei der letztgenannten Variante ist das Fahrgestell 6 quer zur Längsachse 22 der Zugdeichsel 4 ausgerichtet und bei entgegengesetzter Drehrichtung R1, R2 der Kreiselrechen 2, 3 sowie maximaler Länge der Seitenträger 25, 26 wird ein Mittelschwad geformt. Wird die Drehrichtung R2 des Kreiselrechens 3 durch einen Schaltvorgang am Zwischengetriebe 33 bei dieser Maschinenstellung umgekehrt, wird durch jeden der Kreiselrechen 2, 3 ein Schwad nach rechts abgelegt.
Es ist auch möglich, wie in Fig. 3 angedeutet, die vorstehend beschriebene Heuwerbungsmaschine spiegelbildlich zu gestalten, so daß sie nach rechts versetzt hinter dem Zugfahrzeug 19 gezogen werden kann, die Kreiselrechen 2, 3 entgegen dem Uhrzeigersinn rotieren und die Drehrichtung R1, R2 des linken Kreiselrechens 3 umkehrbar ist.
Bei der in Fig. 5 dargestellten Schrägstellung der Heuwerbungsmaschine und gleicher Drehrichtung R1 der Kreiselrechen 2, 3 sowie auf minimale Länge eingefahrenen Seitenträgern 25, 26 überlappen sich die Arbeitsflächen der Kreiselrechen 2, 3 bei in Fahrtrichtung F bewegter Heuwerbungsmaschine. Halm- bzw. Blattgut wird vom Kreiselrechen 2 nach rechts gefördert, vom Kreiselrechen 3 übernommen und gemeinsam mit im Bereich dieses Kreiselrechens 3 liegendem Gut weiter nach rechts transportiert. Es wird ein Seitenschwad abgelegt. Da relativ große Massen bei diesem Vorgang nach rechts bewegt werden, wirkt von den Zinken 36 her über Zinkenarme 37 auf Kreiselräder 38, 39 eine große Kraft nach links, die sich über den Mittelteil 1, die Zugdeichsel 4 und den Rahmenausleger 5 auf das Zugfahrzeug 19 sowie das Fahrgestell 6 überträgt. Durch die schräg nach links versetzte Anordnung der Heuwerbungsmaschine wirkt aber eine Komponente der Zugkraft nach rechts, wodurch ein Ausbrechen der Heuwerbungsmaschine aus der Spur nach links verhindert wird.
Bei sich in Grundstellung G befindlicher Heuwerbungsmaschine sowie in gleicher Drehrichtung R1 umlaufenden Kreiselrechen 2, 3 und Ablage von zwei Einzelschwaden tritt dieser Effekt, wenn auch in vermindertem Maße, auch auf. Bei dieser Arbeitsvariante könnte, wenn erforderlich, ein geringer Versatz des Fahrgestells 6 zum Zugfahrzeug 19 eingestellt werden.

Zu Transportzwecken wird die Länge des Rahmenauslegers 5 so eingestellt, daß das Fahrgestell 6 quer zur Längsachse 22 der Zugdeichsel 4 steht. Dann können über nicht in den Zeichnungen gezeigte Kolben-Zylinderanordnungen, die mit der Hydraulikanlage des Zugfahrzeugs 19 verbunden und über Ventile ansteuerbar sind, die Seitenträger 25, 26 mit den Kreiselrechen 2, 3 um die Schwenkachsen 27, 28 nach oben verschwenkt werden. In einer etwa vertikalen Position sind die Seitenträger 25, 26 durch Fallen zu sichern. Die Kreiselrechen 2, 3 nehmen dann keinen Raum außerhalb der Spurbreite der Laufräder 7, 8 ein und die Heuwerbungsmaschine ist gefahrlos auf der Straße transportierbar. Innerhalb der Kolben-Zylinderanordnungen zum Verschwenken der Seitenträger 25, 26 sind Kraftspeicher vorgesehen, durch die die Räder 34 der Kreiselrechen 2, 3 im Betrieb entlastet und die Laufräder 7, 8 sowie der Anbaubock 9 des Zugfahrzeugs 19 in vertikaler Richtung höher belastet werden.
Dies verbessert die Hangtauglichkeit der Heuwerbungsmaschine. Diesbezügliche Details der Gestaltung sind entsprechend den, in der DE-U1 91 03 150 angegebenen Merkmalen ausgeführt worden.

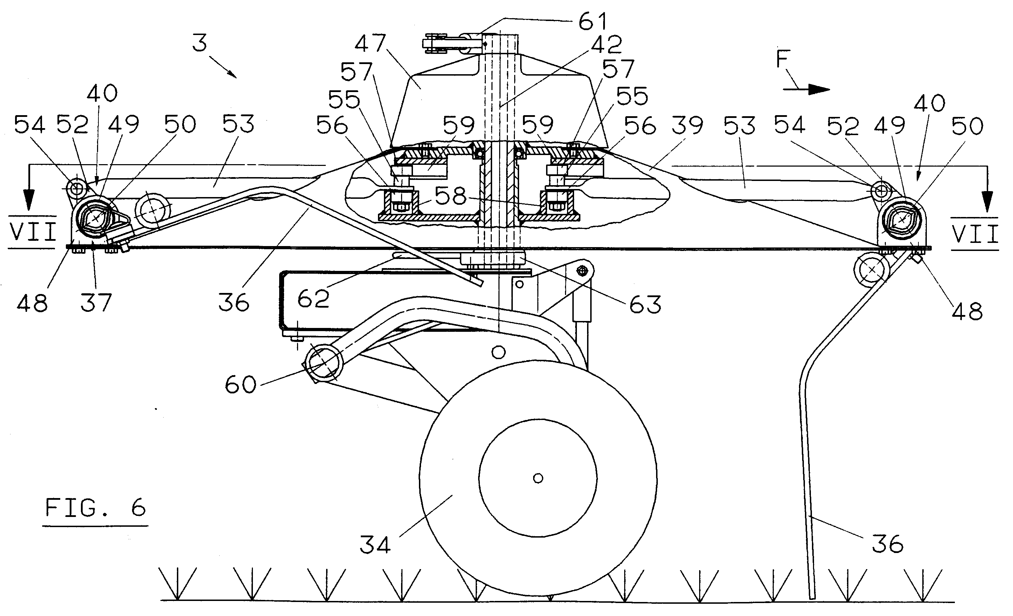

Zumindest der in seiner Drehrichtung R1, R2 umkehrbare Kreiselrechen 3 weist besondere Gestaltungsmerkmale auf, die im folgenden beschrieben werden. Hierzu wird speziell auf die Fig. 6 bis 11 verwiesen.
Die Zinkenarme 37 sind tangential am Kreiselrad 39 durch lösbare Verbindungen 40 gehaltert. Die Zinken 36 befinden sich nur auf einem Teil ihres Umlaufs um etwa vertikale Achse 42 des Kreiselrades 39 in ihrer Rechposition. Der Durchmesser des Kreiselrades 39 und die Länge der Zinkenarme 37 wurde so gewählt, daß eine die Zinkenspitzen 43, 44 verbindende Gerade 45 in Rechposition der Zinken 36 mit einer Geraden 46 durch die äußerste Zinkenspitze 43 und die Achse 42 in einer horizontalen Ebene einen Winkel α von 20 Grad einschließt. Je nach Fahrgeschwindigkeit des Zugfahrzeugs 19 mit der Heuwerbungsmaschine bei der Arbeit und Umfangsgeschwindigkeit der Zinken 36 wird durch die Zinken 36 die größtmögliche Fläche bei einem Winkel α zwischen 10 Grad und 30 Grad überstrichen. Dabei liegt eine sehr gute Arbeitsqualität vor.
Wie insbesondere in Fig. 6 dargestellt, besteht der Kreiselrechen 3 aus einem Getriebe 47, das antriebsseitig, wie beschrieben, mit dem Zugfahrzeug 19 verbunden ist und von dem aus das Kreiselrad 39 um die Achse 42 umlaufend angetrieben wird. Am Umfangsrand des Kreiselrades 39 sind Stehlager 48 aufgeschraubt, wobei jeweils zwei Stehlager 48 ein Schwenkrohr 49 abstützen und diese Einheit ein Traglager 48, 49 bilden, in das jeweils ein Zinkenarm 37 einführbar und arretierbar ist. Durch die Art der Gestaltung der lösbaren Verbindungen 40 mit dem Schwenkrohr 49 des Traglagers 48, 49 wird abgesichert, daß die tangential ausgerichteten Zinkenarme 37 innerhalb des Schwenkrohres 49 nicht verschieblich oder verdrehbar sind. Die Schwenkrohre 49 mit den Zinkenarmen 37 sind begrenzt um Längsachsen 50 verschwenkbar. Dazu sind jeweils symmetrisch zu einer gedachten radialen Linie 51 des Kreiselrades 39, welche rechtwinklig zu der Längsachse 50 durch die Achse 42 verläuft, im folgenden nur mit Radiale 51 bezeichnet, Hebel 52 an den Schwenkrohren 49 der Traglager 48, 49 verschweißt. Die Schwenkrohre 49 selbst sowie die sie abstützenden Stehlager 48 sind ebenfalls jeweils symmetrisch zu den Radialen 51 gestaltet bzw. angeordnet. Die mit den Zinken 36 besetzten Enden der Zinkenarme 37 weisen entgegen der vorgewählten Drehrichtung R1 oder R2 des Kreiselrades 39 tangential von diesem weg. An den Hebeln 52 sind Steuerstangen 53 einseitig so gelagert, daß sie um Achsen 54 verschwenkbar sind, die parallel zu den Längsachsen 50 der Traglager 48, 49 der Zinkenarme 37 ausgerichtet sind. Anderenendes sind die Steuerstangen 53 mit Zapfen 55 verbunden. Unterhalb der Steuerstangen 53 befindet sich je eine Rolle 56 auf dem Zapfen 55 und oberhalb eine Rolle 57. Die Rolle 56 läuft in einer Kurvenbahn 58, welche durch ein nach oben offenes in verschiedenem Abstand um die Achse 42 angeordnetes U-Profil gebildet wird und keine Drehbewegung um die Achse 42 ausführt. Die Rollen 57 bewegen sich in jeweils einer Führungsbahn 59, wobei die Führungsbahnen 59 mit dem Kreiselrad 39 in Verbindung stehen und gemeinsam mit diesem um die Achse 42 rotieren. Die Führungsbahnen 59 sind symmetrisch zu den Radialen 51 gestaltet und angeordnet, wodurch erreicht wird, daß auch die Steuerstangen 53 und die Zapfen 55 mit den Rollen 56, 57 symmetrisch zu den Radialen 51 ausgerichtet sind.

Dadurch, daß die Rollen 56 in der Kurvenbahn 58 geführt werden, ist der Abstand der Zapfen 55 von der Achse 42 veränderlich und die Rollen 57 werden in den Führungsbahnen 59 hin- und herbewegt. Auch die Steuerstangen 53 vollziehen diese Bewegungen mit und bewirken ein begrenztes Verdrehen der Schwenkrohre 49 der Traglager 48, 49 mit den Zinkenarmen 37 um die Längsachsen 50, wobei die Zinken 36 abwechselnd aus ihrer Rechposition heraus in eine ausgehobene Position oder umgekehrt bewegt werden. Die Kurvenbahn 58 ist so gestaltet, daß sich ständig die Zinken 36 von vier Zinkenarmen 37 in einer Rechposition befinden. Des weiteren ist die Kurvenbahn 58 symmetrisch zu einer horizontalen, die Achse 42 schneidenden Geraden M gestaltet, so daß die Bewegung der Zinken 36 in die Rechposition und aus der Rechposition in umgekehrt gleicher Weise erfolgt.

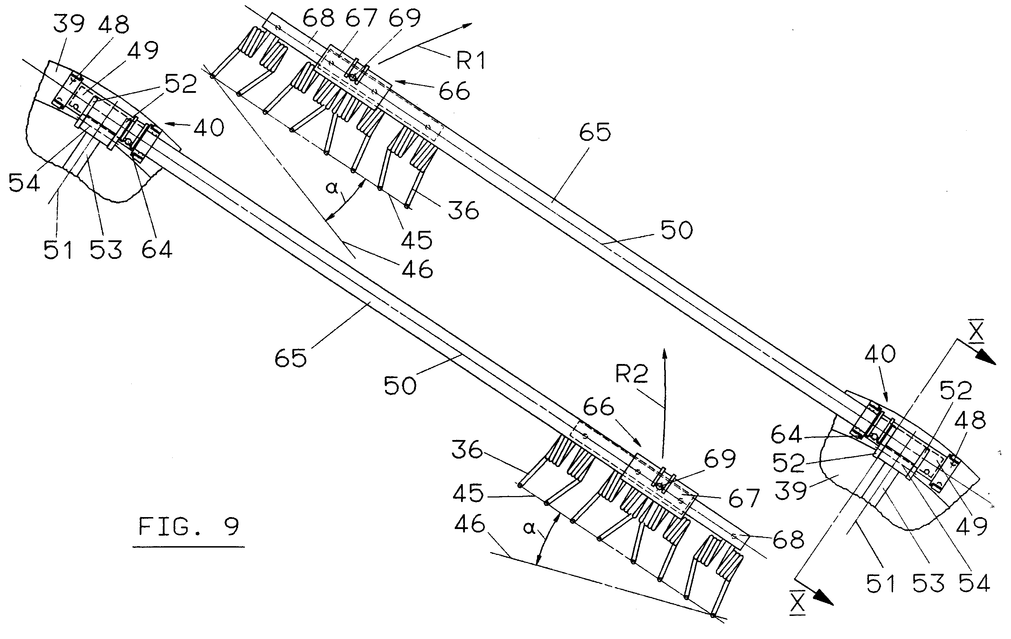

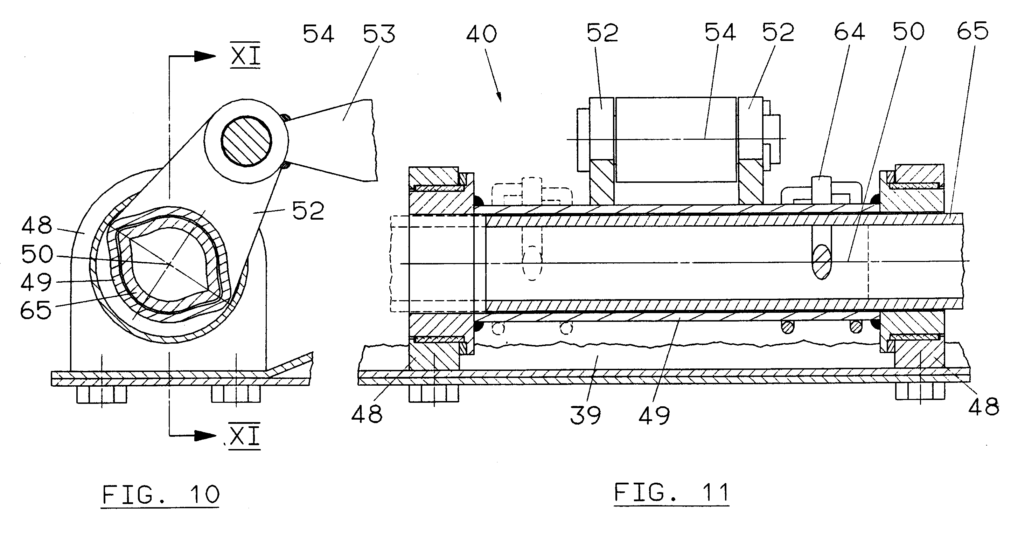

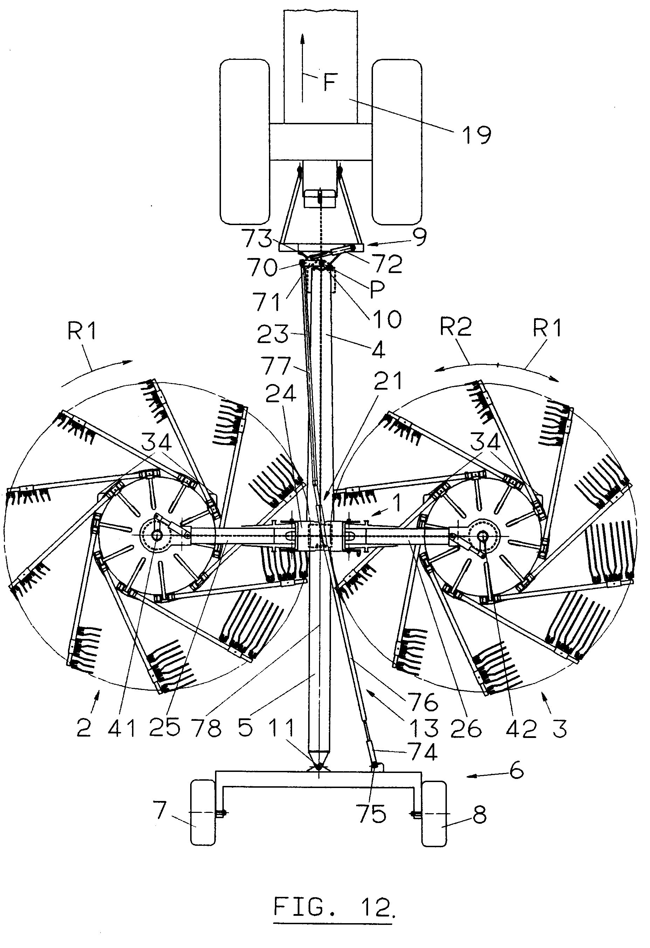

Die Ausrichtung der Kurvenbahn 58 zur Fahrtrichtung F wird in Abhängigkeit von der Stellung einer Querachse 60 der Halterung der Stützräder 34, die über eine Kolben-Zylinderanordnung 61 immer quer zur Fahrtrichtung F ausgerichtet wird, gesteuert. Zusätzlich ist diese Ausrichtung über einen Hebel 62 und ein Feststellstück 63 feingradig veränderbar und festlegbar. Über den Hebel 62 ist festlegbar, wann die Zinken 36 ihre Rechposition während ihrer Drehbewegung um die Achse 42 einnehmen, indem die Kurvenbahn 58 ,nach Lösen des Feststellstücks 63 von der Halterung der Stützräder 34, gemeinsam mit dem Hebel 62 begrenzt um die Achse 42 verschwenkbar ist. Um bei einer Umkehrung der Drehrichtung R1, R2 des Kreiselrades 39 gleiche Arbeitsverhältnisse und eine gleiche Arbeitsqualität wie bei der ursprünglichen Drehrichtung R2, R1 zu erreichen, sind die Verbindungen 40 zwischen den Zinkenarmen 37 und den Schwenkrohren 49 der Traglager 48, 49 am Kreiselrad 39 lösbar (Fig. 10, Fig. 11) und die Zinkenarme 37 zweiteilig ausgeführt (Fig. 9). Nach Umschalten am Zwischengetriebe 33 und Lösen von Verbindungsstiften 64, welche die Zinkenarme 37 in den Schwenkrohren 49 sichern, sind die Zinkenarme 37 aus den Schwenkrohren 49 herauszuziehen und von der anderen Seite wieder in die Schwenkrohre 49 einzustecken und zu sichern. Damit sind die Längsachsen 50 der Zinkenarme 37 wieder tangential ausgerichtet und die Zinkenarme 37 weisen entgegen der neu vorgewählten Drehrichtung R1, R2 vom Kreiselrad 39 weg.
Die Zinkenarme 37 bestehen aus Zwischenstücken 65, die im Schwenkrohr 49 der Traglager 48, 49 wie beschrieben gehaltert werden und aus Zinkenhalteteilen 66, die wiederum lösbar mit den Zwischenstücken 65 verbunden sind.
Die Zinkenhalteteile 66 bestehen aus einem Profilrohr 67, an dem eine Schiene 68 gehaltert bzw. verschweißt ist, woran sich die Zinken 36 abstützen. Auch das Zwischenstück 65 ist vorzugsweise aus Profilrohr gefertigt, wodurch erreichbar ist, daß kein Verdrehen des Zwischenstücks 65 im Schwenkrohr 49 und des Profilrohres 67 auf dem Zwischenstück 65 um die Längsachse 50 erfolgen kann. Das im Ausführungsbeispiel verwendete Rohr für die Schwenkrohre 49 der Traglager 48, 49, die Zwischenstücke 65 und die Profilrohre 67 weist ein Zitronenprofil (Gelenkwellenprofil) auf, dessen Verwendung sich besonders gut eignet. Das Profilrohr 67 wird auf dem Zwischenstück 65 durch einen weiteren Verbindungsstift 69 (im Beispiel ein Klappsplint) gesichert und bei Drehrichtungswechsel des Kreiselrades 39 immer so auf das Zwischenstück 65 aufgesteckt, daß die Zinkenspitzen 43, 44 der Längsachse 50 nacheilen, die Zinken 36 also vom jeweiligen Zinkenarm 37 gezogen werden. Die Zinkenarme 37 mit den Zinken 36 sind also so wahlweise spiegelbildlich zu der Radialen 51 am Kreiselrad 39 zu haltern, daß bei beiden möglichen Drehrichtungen R1, R2 des Kreiselrades 39 gleiche Verhältnisse vorliegen, nur die Seite, auf die das Halm- bzw. Blattgut abgelegt wird, wechselt. Dadurch, daß auch alle Bauteile zur Zinkensteuerung symmetrisch zu der Radialen 51 angeordnet sind und die Kurvenbahn 58 symmetrisch ist, sind auch beim Drehrichtungswechsel analoge Verhältnisse, die Bewegung der Zinken 36 betreffend, gegeben.

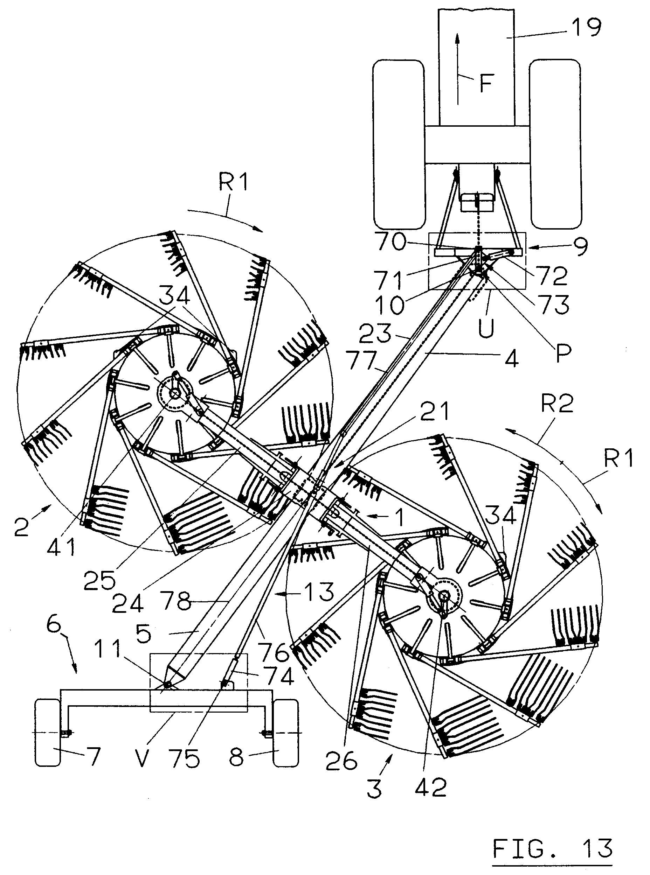

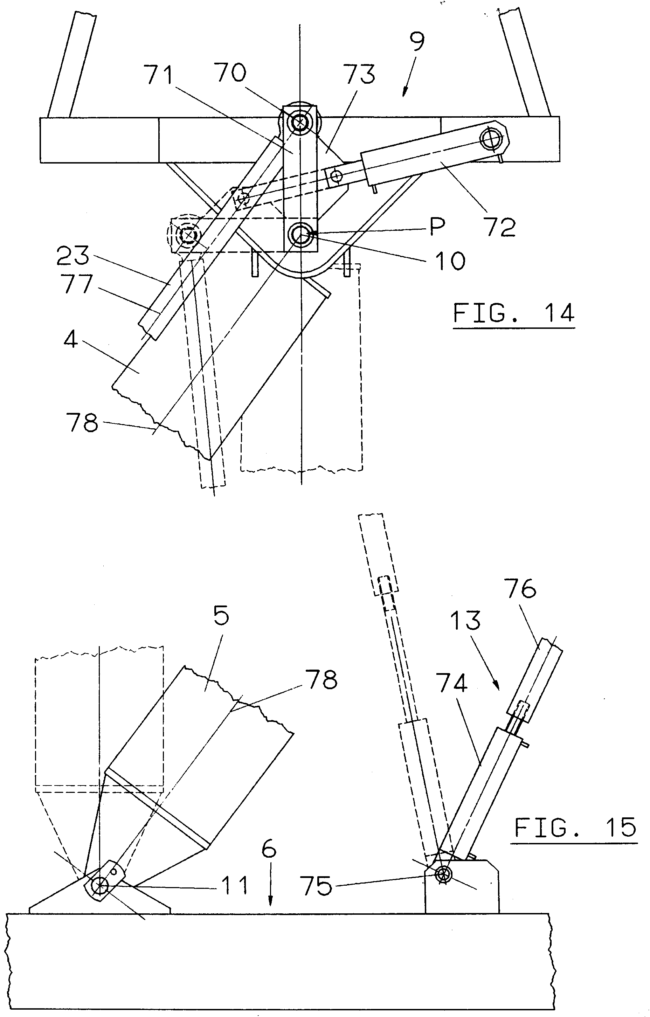

In den Fig. 12 und 13 ist eine Heuwerbungsmaschine anderer Ausführung dargestellt, wobei hier die Lenkgeometrie gegenüber den weiter vorne beschriebenen Ausführungsbeispielen noch weiter verbessert wurde. Einzelheiten dazu werden in den Fig. 14 bis 16 gezeigt. Auch hier ist die Zugdeichsel 4 um einen Zugpunkt P beweglich mit dem Anbaubock 9 des Zugfahrzeugs 19 verbunden. Die Steuerstange 23 ist aber an einem ortsveränderlichen Anlenkpunkt 70 des Anbaubocks 9 gelenkig gelagert, wobei die Position des Anlenkpunktes 70 vom Zugfahrzeug 19 aus festlegbar ist. Dazu befindet sich der Anlenkpunkt 70 an einem Hebel 71 des Anbaubocks 9, der durch die Kraft einer Kolben-Zylinderanordnung 72 um eine etwa vertikale Achse beweglich ist. Vorzugsweise schneidet diese Achse den Zugpunkt P zwischen Zugfahrzeug 19 und Zugdeichsel 4 und liegt damit koachsial zu der Achse 10. Die Kolben-Zylinderanordnung 72 ist einerseits an einer Lasche 73 des Hebels 71 und andererseits am Anbaubock 9 gelenkig befestigt und wird bei Betätigung eines Ventils vom Zugfahrzeug 19 aus mit Druckmittel beaufschlagt. Die Verschwenkbarkeit des Hebels 71 um die Achse 10 ist durch die minimale und die maximal erreichbare Länge der Kolben-Zylinderanordnung 72 begrenzt.
Die hintere Steuerstange 13 ist einerseits am Schiebestück 21 und andererseits im Abstand zu der Achse 11 am Fahrgestell 6 gelenkig gelagert. Diese Steuerstange 13 ist aber in diesem Ausführungsbeispiel längenveränderlich, indem eine weitere Kolben-Zylinderanordnung 74 vorgesehen ist, die Teil der Steuerstange 13 ist. Die Kolben-Zylinderanordnung 74 ist einerseits um eine vertikale Achse 75 verschwenkbar am Fahrgestell 6 gelagert und andererseits mit einem Rohr 76 verbunden, das gelenkig am Schiebestück 21 sitzt. Die Länge der Kolben-Zylinderanordnung 74 und damit der Steuerstange 13 wird ebenfalls vom Zugfahrzeug 19 aus durch Ventilbetätigung verändert, wobei vorzugsweise beide Kolben-Zylinderanordnungen 72, 74 gleichzeitig mit Druckmittel beaufschlagt werden und über ein und dasselbe Ventil ansteuerbar sind.
Der Anlenkpunkt 70 der Steuerstange 23 am Anbaubock 9 und die Lagerung der Steuerstange 13 am Fahrgestell 6 ist in den Fig. 3 und 4 detaillierter dargestellt. In gestrichelter Darstellungsweise wurde dabei die Stellung nach Fig.12 mit aufgenommen. Durch Veränderung der Länge der Kolben-Zylinderanordnungen 72, 74 sind die verschiedenen Grundausrichtungen der Laufräder 7, 8 relativ zum Maschinenquerträger 1 einstellbar, wobei gleichzeitig die Lenkgeometrie der Heuwerbungsmaschine verändert wird.
In der in der Fig. 12 dargestellten Stellung der Heuwerbungsmaschine ist der Hebel 71 etwa quer zur Fahrtrichtung F ausgerichtet, so daß der Anlenkpunkt 70 neben der Achse 10 bzw. dem Zugpunkt P liegt. In dieser Position ist eine gedachte Verbindungslinie zwischen dem Anlenkpunkt 70 und dem Zugpunkt P annähernd rechtwinklig zur Steuerstange 23 ausgerichtet. Finden Schwenkbewegungen des Zugfahrzeugs 19 und damit des Anbaubocks 9 mit dem Hebel 71 nach links oder nach rechts relativ zur Heuwerbungsmaschine um den Zugpunkt P statt, werden diese unabhängig von der Schwenkrichtung in annähernd gleicher Weise auf das Fahrgestell 6 übertragen. Der Anlenkpunkt 70 der Steuerstange 23 bewegt sich dabei deutlich in bzw. entgegen Fahrtrichtung F, so daß auch das Fahrgestell 6 deutlich um die Achse 11 verschwenkt wird.

Die in der Fig. 13 dargestellte Stellung der Heuwerbungsmaschine wird erreicht, indem die Grundausrichtung der Laufräder 7, 8 gegenüber der in der Fig. 12 gargestellten Grundausrichtung verändert wird. Dies erfolgt, indem der Hebel 71 um die Achse 10 um etwa 90 Grad nach vorne verschwenkt wird und die Länge der Steuerstange 13 verringert wird. Bei Fahrt in Fahrtrichtung F stellt sich dann diese Position der Heuwerbungsmaschine ein. Der Anlenkpunkt 70 der Steuerstange 23 liegt jetzt etwa in Fahrtrichtung F vor dem Zugpunkt P und die Steuerstange 23 weist spitzwinklig vom Hebel 71 aus nach hinten. Somit werden Lenkbewegungen des Zugfahrzeugs 19 nach rechts kaum noch auf das Fahrgestell 6 übertragen, da eine Längsachse 77 der Steuerstange 23 in eine Richtung verschwenkt wird, in der sie annähernd die Achse 10 schneidet, also über dem Zugpunkt P verläuft. Es ist kaum noch eine Bewegungskomponente des Hebels 71 in Richtung der Längsachse 77 vorhanden.
Bei Lenkbewegungen des Zugfahrzeugs 19 nach links ist dies anders, da sich der Winkel zwischen dem Hebel 71 und der Steuerstange 23 dabei vergrößert und damit auch eine deutliche Bewegung des Anlenkpunktes 70 und der Steuerstange 23 in Richtung der Längsachse 77 erfolgt.

Eine Ausführungsform der Heuwerbungsmaschine, die nach rechts versetzt gezogen werden kann (siehe Fig.3), ist zu schaffen, indem die Steuerstangen 13, 23, das Schiebestück 21, der Hebel 71 sowie die Kolben-Zylinderanordnung 72 spiegelbildlich zu einer Symmetrieachse 78 des Rahmens angeordnet werden.
Die Verschiebung des Anlenkpunktes 70 der Steuerstange 23 am Anbaubock 9 ist ebenfalls in anderer Weise möglich. Beispielsweise könnte der Anlenkpunkt 70 in einer Kulissenführung geführt werden, wobei der Hebel 71 dann entfällt. Somit sind Anlenkpunkte 70 wählbar, die exakt die gewünschte Lenkungsgeometrie ergeben.

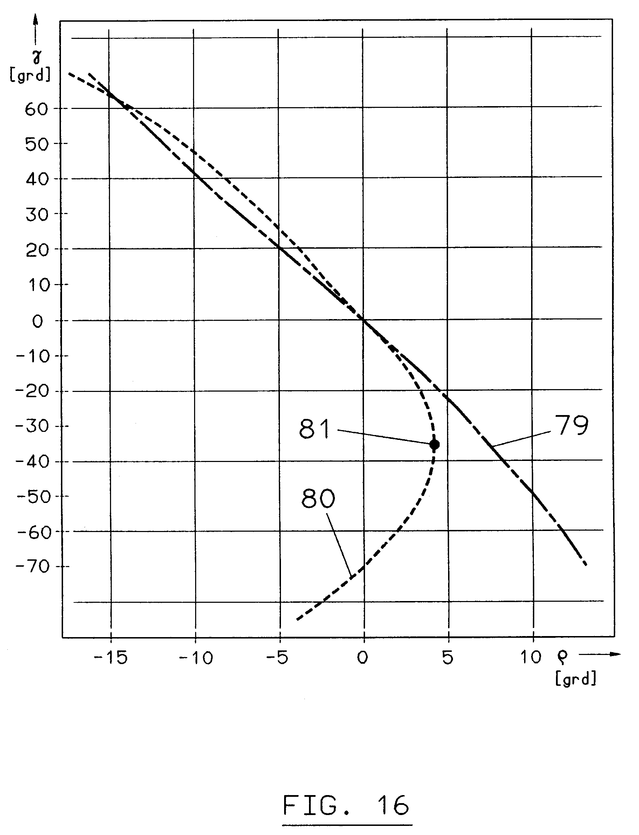

Fig. 16 dient zur Verdeutlichung der Lenkgeometrie der in den Fig. 12 und 13 dargestellten Heuwerbungsmaschine in beiden vorzuwählenden Grundpositionen. In dem Diagramm ist ein Winkel γ eingetragen, von dem ein Winkel ρ abhängig ist. Der Winkel γ ist ein Maß für die Schrägsstellung des Zugfahrzeugs 19 relativ zur ursprünglichen Fahrtrichtung F der Heuwerbungsmaschine. Der Winkel ρ ist ein Maß für die Schrägsstellung des Fahrgestells 6 und damit der Laufrichtung der Laufräder 7, 8 relativ zu der ursprünglichen Fahrtrichtung F der Heuwerbungsmaschine. In Fig. 16 ist die Lenkgeometrie der Heuwerbungsmaschine mit einer Linie 79 dargestellt, wenn sie direkt hinter dem Zugfahrzeug 19 gezogen wird, und mit einer Linie 80 dargestellt, wenn sie schräg versetzt hinter dem Zugfahrzeug 19 gezogen wird. Die Winkel γ und ρ sind positiv, wenn das Zugfahrzeug 19 bzw. das Fahrgestell 6 entgegen Uhrzeigersinn um die jeweiligen Achsen 10, 11 verschwenkt werden. In den Fig. 12 und 13 sind die beiden Grundstellungen der Heuwerbungsmaschine dargestellt, in denen die Winkel γ und ρ den Wert Null haben.
Die Linie 79 hat einen nahezu linearen Verlauf. Dies spricht für eine fast symmetrische Lenkgeometrie, die beim Straßentransport der Heuwerbungsmaschine und beim Formen eines Mittelschwades oder zweier Einzelschwade vorhanden ist.
Der Verlauf der Linie 80 macht deutlich, welche Lenkgeometrie bei versetzt hinter dem Zugfahrzeug 19 gezogener Heuwerbungsmaschine vorliegt. Bei Lenkbewegungen des Zugfahrzeugs 19 nach links ist ein annähernd linearer Verlauf der Linie 80 vorhanden. Durch die Laufräder 7, 8 des Fahrgestells 6 werden also ebenfalls deutliche Lenkbewegungen ausgeführt. Bei Lenkbewegungen des Zugfahrzeugs 19 nach rechts nimmt der Winkel ρ aber nur schwach zu, bis er bei Schrägstellungen des Zugfahrzeugs 19 kleiner als -40 Grad sogar wieder abnimmt. Dieser Wendepunkt 81 ist genau dann erreicht, wenn die Längsachse 77 der Steuerstange 23 die Achse 10 schneidet. Vorteilhaft an dieser Lenkgeometrie ist, daß die Kippsicherheit der Heuwerbungsmaschine bei allen Kurvenfahrten erhalten bleibt, enge Kurvenradien zu durchfahren sind und damit geringe Wendeflächen erforderlich sind. Des weiteren ist vorteilhaft, daß gleichzeitig mit der Vorwahl der Grundausrichtung der Laufräder 7, 8 relativ zum Maschinenquerträger 1 auch automatisch die Lenkgeometrie verändert wird und diese Veränderung zur Erreichung der jeweils neuen Grundausrichtung beiträgt. Dies minimiert den erforderlichen Stellweg an der Steuerstange 13, und die Kolben-Zylinderanordnung 74 kann mit einem relativ geringen Hub ausgelegt werden.

Bei einer so gestalteten Heuwerbungsmaschine ist mit einfachen Mitteln die Zuordnung der Kreiselrechen 2, 3 zur Fahrtrichtung F zu verändern. Je nach Wahl dieser Zuordnung und Längeneinstellung der Seitenträger 25, 26 sowie Vorwahl der Drehrichtung R1, R2 des Kreiselrades 39 sind wahlweise ein Mittelschwad, zwei Einzelschwade oder ein Seitenschwad formbar. Bei allen Schwadvarianten ist die Erreichung einer überdurchschnittlich guten Arbeitsqualität möglich und die Heuwerbungsmaschine weist gute Fahreigenschaften auf. Die Heuwerbungsmaschine ist problemlos aus einer Arbeitslage in eine Transportlage überführbar und so gefahrlos auf der Straße transportierbar.

## Patentansprüche

1. Heuwerbungsmaschine, insbesondere Schwadmaschine, mit mindestens zwei, sich über Stützräder (34) auf dem Erdboden abstützenden Kreiselrechen (2, 3), die gesteuerte Zinkenarme (37) aufweisen und benachbarte Arbeitsflächen bearbeiten, deren Zinken (36) jedoch im Betrieb sich nicht schneidende Umlaufbahnen beschreiben, und mit einem an seinen Enden mit den Kreiselrechen (2, 3) verbundenen Maschinenquerträger (1), der einen mit einer starren, an ein landwirtschaftliches Zugfahrzeug (19) anschließbare Zugdeichsel (4) verbundenen Mittelteil (24) und zwei jeweils um Schwenkachsen (27, 28) durch die Kraft von Kolben-Zylinderanordnungen verschwenkbare Seitenträger (25, 26) aufweist und sich über einen Rahmenausleger (5) und ein Fahrgestell (6) auf wenigstens zwei gelenkten oder ungelenkten Laufrädern (7, 8) zum Erdboden abstützt, dadurch gekennzeichnet, daß die Winkelstellung des Maschinenquerträgers (1) und der Zugdeichsel (4) relativ zur Fahrtrichtung (F) und damit die fahrtrichtungsbezogene Anordnung der Kreiselrechen (2, 3) und ihrer Arbeitsflächen veränderbar ist, indem verschiedene Grundausrichtungen der Laufräder (7, 8) des Fahrgestells (6) relativ zum Maschinenquerträger (1) einstellbar und festlegbar sind, und der Maschinenquerträger (1) und die Zugdeichsel (4) bei in gleicher Drehrichtung (R1) umlaufenden Kreiselrechen (2, 3) aus einer Grundstellung (G) im Uhrzeigersinn bei im Uhrzeigersinn rotierenden Kreiselrechen (2, 3) und entgegen Uhrzeigersinn bei entgegen Uhrzeigersinn rotierenden Kreiselrechen (2, 3) verschwenkbar sind.

2. Heuwerbungsmaschine nach Anspruch 1, dadurch gekennzeichnet, daß der Maschinenquerträger (1) und die Zugdeichsel (4) um eine etwa vertikale Achse (10), die durch einen Zugpunkt zwischen Zugfahrzeug (19) und Zugdeichsel (4) verläuft, verschwenkbar sind.

3. Heuwerbungsmaschine nach den Ansprüchen 1 und 2, dadurch gekennzeichnet, daß die Winkelstellung des Maschinenquerträgers (1) und der Zugdeichsel (4) zur Fahrtrichtung (F) um 10 Grad bis 45 Grad, vorzugsweise 35 Grad, veränderbar ist.

4. Heuwerbungsmaschine nach einem der Ansprüche 1 bis 3, dadurch gekennzeichnet, daß die Drehrichtung (R1, R2) mindestens eines Kreiselrechens (3) umkehrbar ist.

5. Heuwerbungsmaschine nach einem der Ansprüche 1 bis 4, dadurch gekennzeichnet, daß das Fahrgestell (6) an dem die Zugdeichsel (4) nach hinten verlängernden Rahmenausleger (5) um eine etwa vertikale Achse (11) verschwenkbar gelagert ist, über Steuerstangen (13, 23) mit einem Anbaubock (9) am Zugfahrzeug (19) verbunden ist und die Länge des Rahmenauslegers (5) veränderbar und in vorzuwählenden Maßen (B, B + X 2) festlegbar ist.

6. Heuwerbungsmaschine nach einem der Ansprüche 1 bis 4, dadurch gekennzeichnet, daß das Fahrgestell (6) an einem die Zugdeichsel (4) nach hinten verlängernden Rahmenausleger (5) um eine etwa vertikale Achse (11) verschwenkbar gelagert ist, über Steuerstangen (13, 23) mit einem Anbaubock (9) am Zugfahrzeug (19) verbunden ist und die Länge einer Steuerstange (13) veränderbar und in vorzuwählenden Maßen (C, C - X 3) festlegbar ist.

7. Heuwerbungsmaschine nach einem der Ansprüche 1 bis 4, dadurch gekennzeichnet, daß das Fahrgestell (6) in an sich bekannter Weise starr an einem die Zugdeichsel (4) nach hinten verlängernden Rahmenausleger (5) gehaltert ist, die Laufräder (7, 8) einzeln um etwa vertikale Achsen (14, 15) verschwenkbar am Fahrgestell (6) gelagert sind und ihre Laufrichtung über Steuerstangen (18) und eine Spurstange (16) der Fahrtrichtung (F) des Zugfahrzeugs (19) angepaßt wird, wobei die Länge einer Steuerstange (18) veränderbar und in vorzuwählenden Maßen (D, D - X 4) einstellbar ist.

8. Heuwerbungsmaschine nach zumindest einem der Ansprüche 5 bis 7, dadurch gekennzeichnet, daß die Position eines Anlenkpunktes (70) der Steuerstange (23, 18) an dem mit dem Zugfahrzeug (19) verbundenen Anbaubock (9) veränderbar ist, wobei über die Steuerstange (23, 18) Kräfte zur Erzeugung von Lenkbewegungen der Laufräder (7, 8) übertragen werden.

9. Heuwerbungsmaschine nach Anspruch 8, dadurch gekennzeichnet, daß ein Hebel (71), an dem die Steuerstange (23, 18) einseitig gelagert ist, um eine etwa vertikale Achse verschwenkbar am Anbaubock (9) gelagert ist, wobei der Hebel (71) durch die Kraft einer vom Zugfahrzeug (19) aus über ein Ventil ansteuerbaren Kolben-Zylinderanordnung (72) um die Achse verschwenkbar ist.

10. Heuwerbungsmaschine nach den Ansprüchen 8 und 9, dadurch gekennzeichnet, daß der Hebel (71) in einer Grundausrichtung der Laufräder (7, 8) mit etwa rechtwinklig zum Maschinenquerträger (1) weisender Laufrichtung, etwa quer zur Fahrtrichtung (F) und in einer anderen Grundausrichtung der Laufräder (7, 8), in der ihre Laufrichtung relativ zum Maschinenquerträger (1) um etwa 35 Grad gegenüber der ersten Grundausrichtung verändert ist, annähernd in Fahrtrichtung (F) weist, wobei sich der Anlenkpunkt (70) der Steuerstange (23, 18) bei etwa in Fahrtrichtung (F) ausgerichtetem Hebel (71) vor der Achse, um die der Hebel (71) verschwenkbar ist, befindet.

11. Heuwerbungsmaschine nach den Ansprüchen 8 bis 10, dadurch gekennzeichnet, daß die Achse, um die der Hebel (71) verschwenkbar ist, koaxial zu der Achse (10) liegt, um die die Zugdeichsel (4) verschwenkbar am Anbaubock (9) gelagert ist.

12. Heuwerbungsmaschine nach den Ansprüchen 8 bis 11, dadurch gekennzeichnet, daß die Länge des Rahmenauslegers (5) bzw. der Steuerstangen (23, 18) durch die Kraft einer vom Zugfahrzeug (19) aus über ein Ventil ansteuerbaren Kolben-Zylinderanordnung (35, 74) veränderbar und festlegbar ist und daß die Kolben-Zylinderanordnungen (35, 74) gemeinsam über nur ein Ventil derart mit Druckmittel beaufschlagt werden, daß beim Ändern der Grundausrichtung der Laufräder (7, 8), also beim Verändern der Länge des Rahmenauslegers (5) bzw. der Steuerstange (23, 18), auch der Hebel (71) um seine Achse (10) verschwenkt wird.

13. Heuwerbungsmaschine nach zumindest einem der Ansprüche 1 bis 4, dadurch gekennzeichnet, daß das Fahrgestell (6) an einem die Zugdeichsel (4) nach hinten verlängernden Rahmenausleger (5) um eine etwa vertikale Achse (11) verschwenkbar gelagert ist und die Winkelstellung zwischen Fahrgestell (6) und Rahmenausleger (5) durch die Kraft einer Kolben-Zylinderanordnung (12) veränderbar und in vorzuwählenden Positionen festlegbar ist, wobei die Kolben-Zylinderanordnung (12) gelenkig zwischen dem Rahmenausleger (5) und dem Fahrgestell (6) gelagert ist.

14. Heuwerbungsmaschine nach zumindest einem der Ansprüche 1 bis 13, dadurch gekennzeichnet, daß in an sich bekannter Weise die Länge der Seitenträger (25, 26) durch die Kraft von mit der Hydraulikanlage des Zugfahrzeugs (19) verbundenen Kolben-Zylinderanordnungen veränderbar und in vorzuwählenden Maßen festlegbar ist.

15. Heuwerbungsmaschine nach zumindest einem der Ansprüche 1 bis 14, dadurch gekennzeichnet, daß mindestens der in seiner Drehrichtung (R1, R2) umkehrbare Kreiselrechen (3) mit einem um eine aufrechte Achse (42) drehbaren Kreiselrad (39), dessen Antrieb über ein Zwischengetriebe (33) von der Zapfwelle des Zugfahrzeugs (19) aus erfolgt, wobei mit Federspeichern ausgebildete Zinken (36) an etwa horizontal und annähernd tangential zum Kreiselrad (39) ausgerichteten Zinkenarmen (37) gehaltert sind, die wiederum in ebenfalls tangential in Längsrichtung zum Kreiselrad (39) ausgerichteten Traglagern (48, 49) aufgenommen werden und die Zinkenarme (37) zur Erzeugung von Arbeitsbewegungen um Längsachsen (50) der Traglager (48, 49) an einer begrenzt um die Achse (42) verschwenkbaren Kurvenbahn (58) geführt sind und das Kreiselrad (39) in an sich bekannter Weise in seiner Drehrichtung (R1, R2) umkehrbar ist und die Zinkenarme (37) nach Vorwahl einer der beiden möglichen Drehrichtungen (R1, R2) des Kreiselrades (39) endseitig immer derart mit Traglagern (48, 49) lösbar zu verbinden sind, daß sie rechtwinklig und spiegelsymmetrisch zu einer Radialen (51) des Kreiselrades (39) ausgerichtet sind und Federspeicher der Zinken 36) nur in Rollrichtung ihrer Windungen bei der Arbeit belastet werden.

16. Heuwerbungsmaschine nach Anspruch 15, dadurch gekennzeichnet, daß den Zinkenarmen (37) im Bereich ihrer fest am Kreiselrad (39) befindlichen Traglager (48, 49) bei ihrer Drehbewegung um die vertikale Achse (42) ein Drehmoment zur Erreichung ihrer Arbeits- bzw. Schwenkbewegung um die Längsachsen (50) der Traglager (48, 49) erteilt wird.

17. Heuwerbungsmaschine nach Anspruch 15 und 16, dadurch gekennzeichnet, daß die Längsachsen der Zinkenarme (37) koaxial zur Längsachse (50) der Traglager (48, 49) liegen.

18. Heuwerbungsmaschine nach Anspruch 15 bis 17, dadurch gekennzeichnet, daß den Traglagern (48, 49) als Innenteil Schwenkrohre (49) zur Aufnahme der Zinkenarme (37) am Kreiselrad (39) zugeordnet sind, die um annähernd tangentiale Längsachsen (50) verschwenkbar in Stehlagern (48) vom Traglager (48, 49) gelagert sind, wobei die Schwenkbewegungen der Schwenkrohre (49) von der jeweiligen Stellung zur Kurvenbahn (58) bestimmt werden und die Schwenkrohre (49) und damit die Traglager (48, 49) symmetrisch zu Radialen (51), welche rechtwinklig zu den Längsachsen (50) durch die Achse (42) verlaufen, angeordnet sind.

19. Heuwerbungsmaschine nach den Ansprüchen 15 bis 18, dadurch gekennzeichnet, daß die Zinkenarme (37) mit den Traglagern (48, 49) insbesondere mit den Schwenkrohren (49) in Form einer lösbaren Verbindung (40) so gehaltert sind, daß die Bewegungen der Schwenkrohre (49) auf die Zinkenarme (37) übertragen werden.

20. Heuwerbungsmaschine nach den Ansprüchen 15 bis 19, dadurch gekennzeichnet, daß die Zinkenarme (37) mit den Traglagern (48, 49) in einem solchen radialen Abstand zur Achse (42) gelagert sind, daß der horizontale Winkel α zwischen einer die Zinkenspitzen (43, 44) verbindenden Geraden (45) und einer die Achse (42) und die äußerste Zinkenspitze (43) schneidenden Geraden (46) 10 bis 30 Grad, vorzugsweise 20 Grad, beträgt, wenn sich die Zinken (36) in ihrer Rechposition befinden.

21. Heuwerbungsmaschine nach einem der Ansprüche 15 bis 20, dadurch gekennzeichnet, daß Steuerstangen (53) des in seiner Drehrichtung (R1, R2) umkehrbaren Kreiselrechens (3) an jeweils zugehörigen Zapfen (55) zwischen einer Rolle (56) in der Kurvenbahn (58) und einer Rolle (57) in einer Führungsbahn (59) und andererseits an Hebeln (52) der Schwenkrohre (49) gelagert sind.

22. Heuwerbungsmaschine nach einem der Ansprüche 15 bis 21, dadurch gekennzeichnet, daß die Zinkenarme (37) des in seiner Drehrichtung (R1, R2) umkehrbaren Kreiselrechens (3) zweiteilig ausgeführt sind, wobei jeweils ein Zwischenstück (65) endseitig lösbar im Schwenkrohr (49) eines Traglagers (48, 49) zu haltern ist und an dem dann noch freien Ende des Zwischenstücks (65) ein Zinkenhalteteil (66) lösbar jeweils so zu befestigen ist, daß die Zinkenspitzen (43, 44) den Längsachsen (50) der Traglager 48, 49 bzw. der Zinkenarme (37) nacheilen und Federspeicher der Zinken (36) nur in Rollrichtung ihrer Windungen belastet werden.

## Claims

1. A haymaking machine, particularly a swathing machine, having, supported on the ground by jockey wheels (34), at least two rotary rakes (2, 3) which have controlled tine arms (37) and work on adjacent areas and of which the tines (36) in operation describe non-intersecting rotary paths and with a machine cross-member (1) the ends of which are connected to the rotary rakes (2, 3) and which comprises a middle part (24) connected to a rigid draw bar (4) which can be connected to an agricultural tractor vehicle (19) and two side members (25, 26) adapted to pivot about pivot axes (27, 28) under the force of piston-cylinder arrangements, and is supported on the ground via a frame jib (5) and a chassis (6) and on at least two fixed or self-guiding wheels (7, 8), characterised in that the angular position of the machine cross-member (1) and draw bar (4) in relation to the direction of travel (F) and thus the disposition of the rotary rakes (2, 3) which is related to the direction of travel, and the areas on which said rakes can work is variable in that different basic alignments of the wheels (7, 8) of the chassis (6) in relation to the cross-member (1) are adjustable and lockable, and when the rotary rakes (2, 3) are rotating in the same direction (R1), the machine cross-member (1) and the draw bar (4) can be pivoted out of a basic position (G) clockwise when the rotary rakes (2, 3) are rotating in a clockwise direction and anti-clockwise when the rotary rakes (2, 3) are rotating in an anti-clockwise direction.

2. A haymaking machine according to Claim 1, characterised in that the machine cross-member (1) and the draw bar (4) are adapted to pivot about a substantially vertical axis (10) which extends through a traction point between tractor vehicle (19) and draw bar (4).

3. A haymaking machine according to Claims 1 and 2, characterised in that the angular position of the machine cross-member (1) and of the draw bar (4) in relation to the direction of travel (F) can be varied by 10° to 45° and preferably by 35°.

4. A haymaking machine according to one of Claims 1 to 3, characterised in that the direction of rotation (R1, R2) of at least one rotary rake (3) is reversible.

5. A haymaking machine according to one of Claims 1 to 4, characterised in that the chassis (6) is mounted to pivot about a substantially vertical axis (11) on the frame jib (5) which rearwardly extends the draw bar (4) and is connected via control rods (13, 23) to a mounting assembly (9) on the tractor vehicle (19) and in that the length of the frame jib (5) is variable and can be fixed at preselected dimensions (B, B + X 2).

6. A haymaking machine according to one of Claims 1 to 4, characterised in that the chassis (6) is mounted to pivot about a substantially vertical axis (11) on the frame jib (5) which rearwardly extends the draw bar (4) and is connected via control rods (13, 23) to a mounting assembly (9) on the tractor vehicle (19) and in that the length of a control rod (13) is variable and can be fixed at pre-selected dimensions (C, C - X 3).

7. A haymaking machine according to one of Claims 1 to 4, characterised in that the chassis (6) is in per se known manner supported on a frame jib (5) which rearwardly extends the draw bar (4), the wheels of (7, 8) are mounted on the chassis (6) and are adapted to pivot individually about substantially vertical axes (14, 15) while their running direction is adapted by control rods (18) and a track rod (16), the direction of travel (F) of the tractor vehicle (19), the length of a control rod (18) being variable and adjustable to pre-selected dimensions (D, D - X 4).

8. A haymaking machine according to at least one of Claims 5 to 7, characterised in that the position of an articulation point (70) of the control rod (23, 18) on the mounting assembly (9) which is connected to the tractor vehicle (19) is variable, forces to generate steering movements of the wheels (7, 8) being transmitted via the control rods (23, 18).

9. A haymaking according to Claim 8, characterised in that a lever (71) on which one end of the control rod (23, 18) is mounted is itself mounted on the mounting assembly (9) and is pivotable about a substantially vertical axis, the lever (71) being adapted to pivot about the axis by the force of a piston-cylinder arrangement (72) which is controlled from the tractor vehicle (19) via a valve.

10. A haymaking machine according to Claims 8 and 9, characterised in that in a basic alignment of the wheels (7, 8) with the direction of travel extending substantially at right-angles to the machine cross-member (1), the lever (71) is directed substantially crosswise to the direction of travel (F) and, in a different basic orientation of the wheels (7, 8) in which their direction of movement in relation to the machine cross-member (1) has altered by about 35° in relation to the first basic orientation, said lever (71) is directed approximately in the direction of travel (F), the point (70) of articulation of the control rod (23, 18), when the lever (71) is orientated substantially in the direction of travel (F) being situated in front of the axis about which the lever (71) is pivotable.

11. A haymaking machine according to Claims 8 to 10, characterised in that the axis about which the lever (71) is pivotable is coaxial with the axis (10) about which the draw bar (4) is pivotably mounted on the mounting assembly (9).

12. A haymaking machine according to Claims 8 to 11, characterised in that the length of the frame jib (5) or of the control rods (23, 18) can be varied and fixed by the force of a piston-cylinder arrangement (35, 74) which can be controlled from the tractor vehicle (19) via a valve and in that the piston-cylinder arrangements (35, 74) are so jointly subject to the action of pressurised medium via only one valve that when there is a change in the basic orientation of the wheels (7, 8) in other words when there is a variation in the length of the frame jib (5) or control rod (23, 18), also the lever (71) is pivoted about its axis (10).

13. A haymaking machine according to at least one of Claims 1 to 4, characterised in that the chassis (6) is mounted on a frame jib (5) which rearwardly extends the draw bar (4) and can rotate about a substantially vertical axis (11) and in that the angular position of chassis (6) in relation to frame jib (5) can be varied by the force of a piston-cylinder arrangement (12) and fixed in pre-selected positions, the piston-cylinder arrangement (12) being articulatingly mounted between the frame jib (5) and the chassis (6).

14. A haymaking machine according to at least one of Claims 1 to 13, characterised in that in per se known manner the length of the side members (25, 26) can be varied by the force of piston-cylinder arrangements connected to the hydraulic system of the tractor vehicle (19) and can be fixed at pre-selected dimensions.

15. A haymaking machine according to at least one of Claims 1 to 14, characterised in that at least that rotary rake (3) which is reversible in its direction of rotation (R1, R2), together with a flywheel (39) rotatable about a vertical axis (42) and driven via an intermediate gearing (33) by the power take-off shaft of the tractor vehicle (19), tines (36) constructed with spring spokes being supported on tine arms (37) orientated substantially horizontally and approximately tangentially in relation to the flywheel (39), said tine arms (37) being in turn accommodated in support bearings (48, 49) likewise directed tangentially in the longitudinal direction in relation to the flywheel (39) while the tine arms (37), to create working movements are guided about longitudinal spindles (50) in the support bearings (48, 49) along a cam path (58) adapted for limited pivoting movement about the axis (42) while the flywheel (39) is in per se known manner reversible in its direction of rotation (R1, R2) and in that the tine arms (37), after pre-selection of one of the two possible directions of rotation (R1, R2) of the flywheel (39) are at their ends always so separably connected to support bearings (48, 49) that they are aligned at right-angles to and are mirrored-symmetrical with a radial line (51) of the flywheel (39) and in that during working the spring spokes of the tines (36) are only loaded in the direction in which their turns are rolled.

16. A haymaking machine according to Claim 15, characterised in that upon their rotary movement about the vertical axis (42), a torque is imparted to the tine arms (37) in the region of their support bearings (48, 49) which are rigid on the flywheel (39), in order to achieve their working or pivoting movement about the longitudinal axes (50) of the support bearings (48, 49).

17. A haymaking machine according to Claim 15 and 16, characterised in that the longitudinal axes of the tine arms (37) are coaxial with the longitudinal axis (50) of the support bearings (48, 49).

18. A haymaking machine according to Claim 15 to 17, characterised in that, as an interior part, pivot tubes (49) are associated with the support bearings (48, 49) in order to accommodate the tine arms (37) on the flywheel (39) and these are mounted in pedestal bearings (48) of the support bearing (48, 49) so that they can pivot about approximately tangential longitudinal axes (50), the pivoting movements of the pivot tubes (49) being determined by the relevant position in relation to the cam path (58) and in that the pivot tubes (49) and consequently the support bearings (48, 49) are disposed symmetrically in relation to radial lines (51) which extend at a right-angle to the longitudinal axis (50) and through the axis (42).

19. A haymaking machine according to Claims 15 to 18, characterised in that the tine arms (37) with the support bearings (48, 49) and in particular with the pivot tubes (49) are so supported in the form of a separable connection (40) that the movements of the pivot tubes (49) are transmitted to the tine arms (37).

20. A haymaking machine according to Claims 15 to 19, characterised in that the tine arms (37) with the support bearings (48, 49) are mounted at such a radial distance from the axis (42) that the horizontal angle α between a straight line (45) connecting the tine points (43, 44) and a straight line (46) intersecting the axis (42) and the outermost tine point (43) amounts to 10 to 30° and preferably 20° when the tines (36) are in their raking position.

21. A haymaking machine according to one of Claims 15 to 20, characterised in that control rods (53) of the rotary rake (3) which is reversible in its direction of rotation (R1, R2) are mounted on respectively associated journals (55) between a roller (56) in the cam path (58) and a roller (57) in a guide path (59) while at their other end they are mounted on levers (52) on the pivot tubes (49).

22. A haymaking machine according to one of Claims 15 to 21, charactised in that the tine arms (37) of the rotary rake (3) which is reversible in its direction of rotation (R1,R2) are made in two parts, an intermediate piece (65) on each having its end separably mounted in the pivot tube (49) of a support bearing (48, 49), a tine-retaining part (66) being then so separably fixed on the still free end of the intermediate piece (65) that the tine points (43,44) trail the longitudinal axes (5) of the support bearings (48,49) or tine arms (37) and the spring spokes of the tines (36) are loaded only in the direction in which their turns are rolled.

## Revendications

1. Machine de fenaison, notamment andaineuse, comportant au moins deux râteaux rotatifs (2, 3) appuyés sur le sol par des roues de sustentation (34), ces râteaux comportant des bras à dents (37), commandés et traitant des surfaces de travail voisines, les dents (36) ne décrivant toutefois pas de trajectoire de coupe en fonctionnement, ainsi qu'une traverse de machine (1) reliée par ses extrémités aux râteaux rotatifs (2, 3), cette traverse ayant une partie centrale (24) reliée à un timon (4) susceptible d'être raccroché à un tracteur agricole (19), ainsi que deux bras latéraux (25, 26) qu'on peut faire pivoter par la force développée par un vérin, chaque fois autour d'un axe de pivotement (27, 28), et qui s'appuient par un bras de châssis (5) et un châssis (6), sur le sol, par au moins deux roues de roulement (7, 8) articulées ou rigides,
caractérisée en ce que
la position angulaire de la traverse (1) et du timon (4) par rapport à la direction de déplacement (F) et ainsi la disposition des râteaux rotatifs (2, 3) par rapport à la direction de déplacement ainsi que leurs surfaces de travail sont variables en ce que différentes directions de base des roues de roulement (7, 8) du châssis (6) sont réglables par rapport à la traverse (1) et peuvent être fixées, et en ce que la traverse (1) et le timon (4), pour des râteaux rotatifs (2, 3) tournant dans le même sens de rotation (R1), peuvent être pivotés à partir d'une position de base (G), dans le sens des aiguilles d'une montre pour des râteaux rotatifs (2, 3) tournant dans le sens des aiguilles d'une montre, et contre le sens des aiguilles d'une montre pour des râteaux rotatifs (2, 3) tournant dans le sens contraire des aiguilles d'une montre.

2. Machine de fenaison selon la revendication 1,
caractérisée en ce que
la traverse (1) et le timon (4) peuvent être pivotés autour d'un axe (10) sensiblement vertical, passant par un point de traction entre le tracteur (19) et le timon (4).

3. Machine de fenaison selon les revendications 1 et 2,
caractérisée en ce que
la position angulaire de la traverse (1) et du timon (4) par rapport à la direction de déplacement (F) est variable entre 10 et 45° et se situe de préférence à 35°.

4. Machine de fenaison selon l'une des revendications 1 à 3,
caractérisée en ce que
le sens de rotation (R1, R2) d'au moins un râteau rotatif (3) peut être inversé.

5. Machine de fenaison selon l'une des revendications 1 à 4,
caractérisée en ce que
le châssis (6) est monté pivotant sur un bras de châssis (5) prolongeant le timon (4) vers l'arrière, le pivotement se faisant autour d'un axe (11) sensiblement vertical, et le châssis est relié au tracteur (19) par des tiges de commande (13, 23) avec les éléments d'attelage (9), et la longueur du bras de châssis (5) est variable et peut se fixer à des dimensions présélectionnées (B, B + X 2).

6. Machine de fenaison selon l'une des revendications 1 à 4,
caractérisée en ce que
le châssis (6) est monté pivotant sur un bras de châssis (5) prolongeant le timon (4) vers l'arrière, autour d'un axe (11) sensiblement vertical, en étant relié aux éléments d'attelage (9) du tracteur (19) par des tiges de commande (13, 23), et la longueur d'une tige de commande (13) est variable et peut se fixer suivant des mesures présélectionnées (C, C - X 3).

7. Machine de fenaison selon l'une des revendications 1 à 4,
caractérisée en ce que
le châssis (6) est maintenu d'une manière rigide, connue en soi, sur un bras de châssis (5) prolongeant le timon (4) vers l'arrière, les roues de roulement (7, 8) pouvant pivoter séparément autour d'axes verticaux (14, 15) sur le châssis (6) et leur direction de déplacement pouvant être adaptée par des tiges de commande (18) et une tige de couplage (16) à la direction de déplacement (F) du tracteur (19), la longueur d'une tige de commande (18) étant variable et se réglant à des dimensions présélectionnées (D, D - X 4).

8. Machine de fenaison selon l'une des revendications 5 à 7,
caractérisée en ce que
la position d'un point d'articulation (70) de la tige de commande (23, 18) a un élément d'attelage (9) relié au tracteur (19) est variable, la tige de commande (23, 18) permettant de transmettre les efforts créant les mouvements de direction des roues de roulement (7, 8).

9. Machine de fenaison selon la revendication 8,
caractérisée par
un levier (71) dont une extrémité est articulée à la tige de commande (23, 18) autour d'un axe sensiblement vertical prévu pivotant sur l'élément d'attelage (9), le levier (71) étant pivoté autour de l'axe par La force d'un vérin (72) commandé à partir du tracteur (19) à l'aide d'une vanne.

10. Machine de fenaison selon l'une des revendications 8 et 9,
caractérisée en ce que
pour un alignement de base des roues de roulement (7, 8) avec une direction de roulement sensiblement perpendiculaire à la traverse (1), le Levier (71) est sensiblement dirigé transversalement à la direction de déplacement (F) et, pour des roues de roulement (7, 8) occupant un autre alignement de base pour lequel leur direction de circulation est modifiée d'environ 35° par rapport au premier alignement, par rapport à la traverse (1), correspondant alors pratiquement à la direction de déplacement (F), le point d'articulation (70) de la tige de commande (23, 18), lorsque le levier (71) est sensiblement aligné dans la direction de déplacement (F), se trouve devant l'axe autour duquel peut pivoter le levier (71).

11. Machine de fenaison selon l'une des revendications 8 à 10,
caractérisée en ce que
l'axe autour duquel pivote le levier (71) est coaxial à l'axe (10) autour duquel le timon (4) pivote sur l'élément d'attelage (9).

12. Machine de fenaison selon l'une des revendications 8 à 11,
caractérisée en ce que
la longueur du bras (5) du châssis ou des tiges de commande (23, 18) se modifie par la force développée par un vérin (35, 74) commandé par une vanne à bord du tracteur (19) et peut se fixer, et en ce que les vérins (35, 74) ne sont mis en oeuvre en commun avec du fluide sous pression que par une vanne seulement pour qu'en modifiant la direction de base des roues de roulement (7, 8), c'est-à-dire en modifiant la longueur du bras de châssis (5) ou des tiges de commande (23, 18), le levier (71) pivote également autour de son axe (10).

13. Machine de fenaison selon l'une des revendications 1 à 4,
caractérisée en ce que
le châssis (6) est monté pivotant sur un bras de châssis (5) prolongeant le timon (4) vers l'arrière, autour d'un axe (11) sensiblement vertical, et la position angulaire entre le châssis (6) et le bras (5) est modifiée par la force développée par un vérin (12) et se fixe dans des positions prédéterminées, le vérin (12) étant monté articulé entre le bras (5) et le châssis (6).

14. Machine de fenaison selon au moins l'une des revendications 1 à 13,
caractérisée en ce que
de manière connue en soi, la longueur des bras (25, 26) peut être modifiée par la force développée par des vérins reliés au circuit hydraulique du tracteur (19), et se fixer à des valeurs prédéterminées.

15. Machine de fenaison selon au moins l'une des revendications 1 à 14,
caractérisée en ce qu'
au moins le râteau rotatif (3), dont le sens de rotation (R1, R2) peut être inversé, comporte un rotor (39) tournant autour d'un axe vertical (42) dont l'entraînement se fait par une transmission intermédiaire (33) à partir de la prise de force du tracteur (19), des dents (36) en forme de rayons élastiques étant portées par des bras (37) sensiblement horizontaux et pratiquement tangents au rotor (39), ces bras étant eux-mêmes montés dans des paliers (48, 49) alignés sensiblement tangentiellement dans la direction longitudinale du rotor (39), et en ce que pour créer des mouvements actifs autour des axes longitudinaux (50) des paliers (48, 49), les bras porte-dents (37) sont guidés sur un chemin de cames (58) pivotant de manière limitée autour de l'axe (42) et le sens de rotation (R1, R2) du rotor (39) peut être inversé de façon connue, tandis que les bras à dents (37), après sélection de l'un des deux sens de rotation (R1, R2) possibles du rotor (39), sont reliés en extrémité avec les bras de support (48, 49), de manière amovible, pour être alignés à l'équerre et de manière symétrique plane par rapport à un rayon (51) du rotor (39), et les rayons élastiques des dents (36) ne sont chargés au fonctionnement que dans le sens de roulement de leur spire.

16. Machine de fenaison selon la revendication 15,
caractérisée en ce que
les bras porte-dents (37) reçoivent, au niveau de leurs paliers (48, 49) prévus sur le rotor (39), et au cours de leur mouvement de rotation autour de l'axe vertical (42), un couple pour réaliser leur mouvement de travail ou de pivotement autour des axes longitudinaux (50) des paliers de support (48, 49).

17. Machine de fenaison selon les revendications 15 et 16,
caractérisée en ce que
les axes longitudinaux des bras à dents (37) sont coaxiaux à l'axe longitudinal (50) des paliers (48, 49).

18. Machine de fenaison selon l'une des revendications 15 à 17,
caractérisée en ce qu'
aux paliers (48, 49) sont associés, comme parties intérieures, les tubes pivotants (49) pour recevoir les bras à dents (37) sur le rotor (39), qui sont montés pivotant autour d'axes longitudinaux (50) pratiquement tangents, dans des paliers debout (48) des paliers (48, 49), les mouvements de pivotement des tubes (49) étant définis par la position respective par rapport aux chemins de cames (48), tandis que les tubes pivotants (49) et ainsi les paliers de support (48, 49) sont symétriques par rapport aux directions radiales (51) elles-mêmes perpendiculaires à l'axe longitudinal (50) en passant par l'axe (42).

19. Machine de fenaison selon les revendications 15 à 18,
caractérisée en ce que
les bras à dents (37) sont montés avec les paliers (48, 49), notamment avec des tubes pivotants (49), sous la forme d'une liaison amovible (40), et les mouvements de tubes pivotants (49) sont transmis aux bras porte-dents (37).

20. Machine de fenaison selon l'une des revendications 15 à 19,
caractérisée en ce que
les bras à dents (37) avec les paliers (48, 49) sont montés à une certaine distance radiale par rapport à l'axe (42) pour que l'angle horizontal α compris entre l'une des droites (45) passant par les pointes des dents (43, 44) et, une droite (46) coupant l'axe (42) et la pointe de dent extérieure (43), soit compris entre 10 et 30° et soit de préférence égal à 20°, lorsque les dents (36) occupent leur position de raclage.

21. Machine de fenaison selon l'une des revendications 15 à 20,
caractérisée en ce que
les tiges de commande (53) du râteau rotatif (3) dans son sens de rotation réversible (R1, R2) sont montées sur des tourillons (55) respectifs entre un galet (56) du chemin de cames (58) et un galet (57) d'un chemin de guidage (59), et par ailleurs sur des leviers (52) des tubes pivotants 49).

22. Machine de fenaison selon l'une des revendications 15 à 21,
caractérisée en ce que
les bras à dents (37) du râteau rotatif (33) dans son sens de rotation (R1, R2) réversible sont en deux parties, une pièce intermédiaire (55) étant chaque fois maintenue de manière amovible, par une extrémité, aux tubes pivotants (49) d'un palier (48, 49), et par l'autre extrémité encore libre de la pièce intermédiaire (65), une partie de support de dents (66) est fixée chaque fois de manière amovible pour que les pointes de dents (43, 44) soient en retard par rapport aux axes longitudinaux (50) des paliers (48, 49) ou des bras à dents (37), et que les rayons élastiques des dents (36) ne soient sollicités que dans le sens de l'enroulement de leur spire.
